(19) Europäisches Patentamt

European Patent Office

Office européen des brevets

(11) **EP 0 924 627 B1**

(12) **FASCICULE DE BREVET EUROPEEN**

(45) Date de publication et mention
de la délivrance du brevet:
**04.10.2006 Bulletin 2006/40**

(51) Int Cl.:
***G06F 17/14*** *(2006.01)*

(21) Numéro de dépôt: **98403099.9**

(22) Date de dépôt: **09.12.1998**

(54) **Processeur de calcul d'une transformation rapide de Fourier à architecture dite "pipelinée"**

Pipelineprozessor für die schnelle Fourier-Transformation

Pipelined fast Fourier transform processor

(84) Etats contractants désignés:
**DE FR GB IT**

(30) Priorité: **19.12.1997 FR 9716115**

(43) Date de publication de la demande:
**23.06.1999 Bulletin 1999/25**

(73) Titulaire: **STMicroelectronics S.A.**
**92120 Montrouge (FR)**

(72) Inventeur: **Cambonie, Joel**
**38190 La Combe de Lancey (FR)**

(74) Mandataire: **Casalonga, Axel**
**Bureau Casalonga & Josse**
**Bayerstrasse 71/73**
**80335 München (DE)**

(56) Documents cités:
- **BASOGLU C ET AL: "An efficient FFT algorithm for superscalar and VLIW processor architectures" REAL-TIME IMAGING, DEC. 1997, ACADEMIC PRESS, UK, vol. 3, no. 6, pages 441-453, XP002073374 ISSN 1077-2014**
- **BLAIR G M: "A review of the discrete Fourier transform. 2. Non-radix algorithms, real transforms and noise" ELECTRONICS & COMMUNICATION ENGINEERING JOURNAL, OCT. 1995, UK, vol. 7, no. 5, pages 187-194, XP002073375 ISSN 0954-0695**
- **HUI C C W ET AL: "A 64-POINT FOURIER TRANSFORM CHIP FOR VIDEO MOTION COMPENSATION USING PHASE CORRELATION" IEEE JOURNAL OF SOLID-STATE CIRCUITS, vol. 31, no. 11, novembre 1996, pages 1751-1761, XP000691460**
- **SWARTZLANDER E E JR ET AL: "A radix 4 delay commutator for fast Fourier transform processor implementation" IEEE JOURNAL OF SOLID-STATE CIRCUITS, OCT. 1984, USA, vol. SC-19, no. 5, pages 702-709, XP002073376 ISSN 0018-9200**

EP 0 924 627 B1

## Description

L'invention concerne les dispositifs de calcul de transformée de Fourier à architecture dite "série" ou "pipelinée", et leur mode de fonctionnement.

De nombreuses implémentations de transformées de Fourier dédiées ou programmées sur des microprocesseurs de traitement du signal ont été exposées dans la littérature. La plupart de ces implémentations utilisent une variante de l'algorithme de Cooley-Tukey, bien connu de l'homme du métier, qui permet de réduire le nombre d'opérations arithmétiques nécessaires au calcul de la transformée de Fourier. Cet algorithme permet ainsi notamment de réduire le calcul d'une transformée de Fourier rapide de taille initiale $r^p$, où r représente le "radix" selon une dénomination habituellement utilisée par l'homme du métier, en celui de r transformées de Fourier de taille $r^{p-1}$ et d'additions et de multiplications complexes supplémentaires. En réitérant cette réduction, on arrive au calcul de transformées de Fourier de taille r, aisément réalisables, notamment si r est choisi égal à 2 ou 4.

L'algorithme de Cooley-Tukey utilise un graphe de calcul faisant apparaître une structure en forme générale de papillon, bien connue de l'homme du métier, et communément désignée en langue anglaise sous le terme "butterfly".

Plusieurs architectures matérielles sont alors possibles pour implémenter une structure de calcul en forme de papillon.

Une première solution consiste à réaliser un opérateur matériel capable d'effectuer un calcul de type papillon, par papillon du graphe. Cependant, une telle solution n'est envisageable que pour l'implémentation de transformées de Fourier de petite taille.

Une deuxième solution consiste à ne réaliser qu'un seul opérateur matériel du type papillon, et destiné à effectuer successivement les calculs correspondant à tous les papillons de tous les étages du graphe. Une telle solution présente l'inconvénient de nécessiter d'une part un opérateur matériel très rapide, et d'autre part une mémoire d'entrée distincte de la mémoire servant à écrire les résultats intermédiaires de calcul et ce, afin d'éviter les conflits d'accès lorsqu'un bloc de données entre dans l'opérateur alors que le bloc précédent est encore en cours de traitement. Il est donc nécessaire de prévoir deux mémoires de N0 mots complexes, où N0 désigne la taille initiale de la transformée de Fourier, ce qui conduit à un circuit global d'une surface importante, notamment lorsque N0 est grand.

Une solution intermédiaire consiste à réaliser un opérateur matériel du type papillon par étage du graphe, ainsi qu'un élément de mémorisation, tel que des lignes à retard ou des registres à décalage, dont la fonction est de présenter en entrée de l'opérateur les données dans le bon ordre compte tenu des papillons du graphe de l'étage considéré.

De telles architectures sont dites "série" ou "pipelinées" selon une dénomination usuelle employée par l'homme du métier.

Plus précisément, un dispositif électronique de calcul d'une transformée de Fourier dite "à architecture pipelinée" comprend une pluralité d'étages de traitement successifs connectés en série entre l'entrée et la sortie du dispositif par des chemins de données internes. Ces étages comportent respectivement d'une part des moyens de traitement élémentaires aptes à effectuer des traitements de transformée de Fourier de tailles élémentaires plus faibles que la taille initiale, sur des blocs de données de tailles successivement réduites d'un étage au suivant et, d'autre part, des moyens de mémorisation élémentaires.

Par "taille initiale" de la transformée de Fourier on entend ici et dans la suite du texte la taille des blocs reçus en entrée du dispositif par le premier étage.

Les tailles élémentaires des transformées de Fourier effectuées par les différents étages peuvent être identiques et égales au radix de la transformée de Fourier. On parle alors de transformée de Fourier à radix "uniforme." Elles peuvent être différentes d'un étage à l'autre dans le cas de transformées de Fourier à radix "mixte".

Des exemples de telles architectures pipelinées sont décrits dans l'article de BI et JONES intitulé "a Pipelined FFT Processor for Word-Sequential Data", IEEE Transactions on Acoustic Speech and Signal Processing, vol. 37, n° 12, décembre 1989, pages 1982 - 1985, et dans l'article de BIDET et autres, intitulé "A Fast Single-Chip Implementation of 8192 Complex Point FFT", IEEE Journal of Solid-State Circuits, vol. 30, n° 3, mars 1995, pages 300 - 305.

Les moyens de mémorisation décrits dans ces architectures connues, comportent des lignes à retard qui sont des éléments très simples à gérer et qui présentent l'avantage d'être généralement compacts (utilisation de trois transistors par bit mémorisé). Cependant, ces éléments ne sont pas toujours disponibles en tant que cellules standard dans des librairies usuelles de composants utilisables pour la définition et la conception des circuits intégrés. En outre, leurs caractéristiques électriques sont dépendantes de la technologie utilisée de telle sorte que l'architecture du circuit doit être soigneusement réétudiée à chaque fois que la technologie évolue.

Par ailleurs, de telles architectures utilisent des lignes à retard dont la capacité totale de stockage est égale à 2N0 pour une taille initiale de transformée de Fourier égale à N0, alors que la capacité minimale théorique de stockage est égale à N0.

L'invention vise à apporter une solution à ce problème.

Un but de l'invention est de proposer un dispositif de calcul d'une transformée de Fourier à architecture pipelinée, capable de travailler avec de très hautes fréquences d'horloge tout en minimisant la taille mémoire nécessaire, jusqu'au minimum théorique dans certains cas, et en utilisant des éléments de mémorisation classiques et aisément disponibles quelle que soit la technologie utilisée.

L'invention a également pour but de proposer un dispositif de calcul d'une transformée de Fourier capable d'être testée aisément avec des méthodes de test dites "full scan" ("test exhaustif"), bien connues de l'homme du métier.

L'invention a également pour but de tenir compte de l'intervalle de garde éventuel, séparant les différents symboles devant être traités par transformée de Fourier, notamment dans des applications terrestres de télévision numérique utilisant pour la transmission un codage OFDM (Orthogonal Frequency Division Multiplex : "multiplexage à répartition orthogonale de fréquence").

L'invention propose donc un dispositif électronique de calcul d'une transformée de Fourier à architecture dite "pipelinée". En d'autres termes, ce dispositif électronique de calcul comprend une pluralité d'étages de traitement successifs connectés en série entre l'entrée et la sortie du dispositif, ces étages comportant respectivement d'une part des moyens de traitement élémentaires aptes à effectuer des traitements de transformées de Fourier de tailles élémentaires plus faibles que la taille initiale, sur des blocs de données de tailles successivement réduites d'un étage au suivant, et d'autre part des moyens de mémorisation élémentaires.

Selon une caractéristique générale de l'invention, ce dispositif comprend au moins un étage de traitement dit "à radix 4", c'est-à-dire comportant des moyens de traitement élémentaires effectuant des traitements de transformées de Fourier de taille élémentaire égale à 4 sur des blocs de données, ainsi que des moyens de mémorisation élémentaires comportant une mémoire à accès aléatoire, en particulier une mémoire statique simple accès.

L'utilisation d'une mémoire à accès aléatoire (mémoire vive), qu'elle soit double accès (à double port) ou simple accès (à port unique, c'est-à-dire autorisant soit un accès en écriture, soit un accès en lecture à chaque cycle de l'horloge interne du dispositif), nécessite une gestion spécifique d'adressage pour stocker et redélivrer dans le bon ordre les données intermédiaires mémorisées, gestion d'autant plus complexe que le radix de la transformée de Fourier est supérieur à 2, en particulier lorsqu'il est égal à 4, et va à l'encontre de tous les enseignements actuels en la matière qui prévoient l'utilisation de lignes à retard ou de registres à décalage.

Il a été observé par ailleurs que l'utilisation d'une mémoire à accès aléatoire permettait de réduire la capacité de stockage étage par étage, et donc la capacité totale de stockage du dispositif, par rapport à la capacité de stockage nécessaire lors de l'emploi de lignes à retard.

Un tel composant est en outre aisément disponible dans les librairies usuelles de composants, en particulier dans sa forme la plus simple (mémoire simple accès), et est totalement indépendant de la technologie utilisée et parfaitement compatible avec des fréquences d'horloge très élevées.

Bien que différentes architectures matérielles internes des moyens de traitement élémentaires soient envisageables pour l'implémentation des traitements du type papillon au sein de chaque étage, il s'avère préférable que les moyens de traitement élémentaires de l'étage à radix 4 effectuent respectivement N/4 traitements du type "papillon" sur N/4 groupes disctincts de quatre données de chaque bloc de données traité par cet étage, N étant la taille du bloc.

Ces moyens de traitement élémentaires selon l'invention qui prévoient donc de n'appeler "qu'une seule fois" chaque donnée (ou opérande) du bloc reçu pour effectuer les différents traitements du type papillon, se distinguent ainsi notamment de l'opérateur matériel utilisé dans l'article de BIDET et al. précité, qui prévoit d'appeler plusieurs fois chaque opérande pour effectuer les traitements. Les moyens de traitement élémentaires d'un étage à radix 4 selon l'invention comportent alors huit additionneurs complexes et un multiplieur alors que l'art antérieur avec lignes à retard ne prévoit que six additionneurs et un multiplieur. Cependant, ces moyens de traitement élémentaires selon l'invention permettent de mémoriser moins de données intermédiaires et contribuent, en combinaison avec l'utilisation d'une mémoire à accès aléatoire, à minimiser encore la capacité de stockage étage par étage.

Selon un mode de réalisation de l'invention, la capacité de stockage d'un étage de traitement à radix 4 est égale à 3N/4 données, N étant la taille des blocs de données traites par cet étage de traitement. En d'autres termes, l'invention est ici remarquable en ce sens qu'elle ne prévoit de stocker dans chaque étage que les trois quarts des données reçues par cet étage, ce qui conduit à une capacité totale de stockage pour le dispositif égale à N0, N0 étant la taille initiale des blocs traités par le premier étage du dispositif, c'est-à-dire la taille initiale de la transformée de Fourier. Le gain en capacité de stockage par étage de traitement à radix 4 et donc d'un facteur 2 par rapport à la solution de l'art antérieur prévoyant l'utilisation de lignes à retard.

Un autre problème dans les dispositifs de calcul de transformées de Fourier réside dans la dynamique des données intermédiaires et de sortie, compte tenu de la dynamique des données d'entrée. Par "dynamique" on entend ici le nombre de bits, y compris le bit de signe, utilisé pour représenter ces données. Les opérateurs matériels du type papillon effectuent des multiplications et des additions complexes. Il s'avère bien entendu irréaliste de conserver multiplication après multiplication, notamment, tous les bits des résultats obtenus. Aussi est-il habituel, en particulier dans les architectures pipelinées de travailler à dynamique constante, c'est-à-dire de représenter les données d'entrée, intermédiaires et de sortie sur un même nombre de bits.

Cependant, si la dynamique est constante, la valeur de dynamique des données intermédiaires ne peut pas être connue à l'avance. Par "valeur de dynamique" d'une donnée on entend la plage de valeurs dans laquelle se situe cette donnée, c'est-à-dire par exemple entre -0,5 et +0,5 ou entre -0,05 et +0,05 etc...

Aussi, une première solution consiste à étendre globalement a priori la dynamique des données, c'est-à-dire qu'on estime a priori la dynamique nécessaire sur les données en sortie du circuit pour ne pas perdre trop de précision sur les bits significatifs, en supposant bien sûr, qu'il ne se produit aucune saturation sur le calcul interne, et on augmente ensuite la taille des mots de données d'entrée du nombre de bits supplémentaires estimé.

Les données intermédiaires et les données de sortie seront donc également représentées avec des mots de cette taille. Ceci conduit à une augmentation de la taille des chemins de données internes du circuit.

Lorsque, pour certaines applications de l'invention, notamment dans le cas de transformées de Fourier dont la taille initiale n'est pas trop importante, on peut envisager que tous les étages de traitement à radix 4 du dispositif aient une capacité de mémorisation égale aux trois quarts des données reçues par l'étage correspondant.

Ceci étant, dans d'autres applications, notamment lorsque la taille initiale de la transformée de Fourier est importante, nécessitant alors de nombreux étages de traitement, l'estimation a priori de la dynamique nécessaire peut conduire à une augmentation trop importante de la taille des chemins de données internes et donc à une augmentation pénalisante de la surface du circuit.

Aussi, dans ce cas, est-il particulièrement avantageux de prévoir des étages de traitement à radix 4 d'un deuxième type c'est-à-dire dont les moyens de traitement élémentaires comportent des moyens aptes à déterminer la dynamique des données de chaque bloc traité et à effectuer un recadrage de ces données compte tenu de ladite dynamique. En pratique, ce recadrage peut consister à estimer la valeur maximale des données du bloc et à diviser chaque donnée du bloc par cette valeur maximale. Cependant, pour effectuer un tel recadrage des données, il est alors nécessaire que ces étages de traitement à radix 4 du deuxième type comportent des moyens de mémorisation élémentaires ayant une capacité de stockage égale à N, N étant toujours la taille des blocs de données traités par cet étage.

Bien que la capacité de stockage d'un tel étage à radix 4 d'un deuxième type, soit supérieure à la capacité de stockage d'un étage à radix 4 d'un premier type, c'est-à-dire dans lequel on n'effectue pas de recadrage des données, cette capacité de stockage égale à N reste toutefois inférieure à celle d'un étage à radix 4 de l'art antérieur utilisant des lignes à retard et réalisant également un recadrage des données, tel que décrit dans l'article de BIDET et al. précité.

Il convient également de noter ici que de toute façon, dans les dispositifs de calcul de transformées de Fourier à plusieurs étages, le premier étage, c'est-à-dire l'étage d'entrée, ne comporte généralement pas de moyens de recadrage des données, car on suppose généralement que les données entrantes sont déjà correctement cadrées.

Ceci, dans certaines applications nécessitant une très bonne précision sur les données, il est possible d'envisager que des moyens de recadrage des données soient incoporés même dans le premier étage.

Quel que soit le type de l'étage à radix 4, il est possible de prévoir que les moyens de mémorisation élémentaires de cet étage soient uniquement constitués d'une mémoire à accès aléatoire. Cependant, il est particulièrement avantageux d'associer à cette mémoire à accès aléatoire un ou plusieurs niveaux de registres ou bascules, mutuellement connectés en série avec la mémoire. Ceci permet en effet de séparer la mémoire proprement dite de la partie opérative de l'étage et d'utiliser des outils automatiques de génération de vecteurs de test. Ces méthodes automatiques de test dites "méthodes full scan", bien connues de l'homme du métier, consistent notamment à charger toutes les bascules puis à effectuer des calculs et à réécrire les données dans les bascules de façon à réaliser le test.

Ainsi, il est particulièrement avantageux, en ce qui concerne un étage de traitement à radix 4 du premier type (c'est-à-dire sans recadrage des données), que les moyens de mémorisation élémentaires de cet étage comprennent une mémoire à accès aléatoire simple accès et n registres mutuellement connectés en série avec la mémoire. La mémoire est alors apte à stocker $N/4 -(n-1)$ mots de trois données tandis que chaque registre est apte à stocker un mot de trois données.

Pour les étages de traitement du deuxième type (c'est-à-dire avec recadrage des données), les moyens de mémorisation élémentaires de cet étage comprennent avantageusement également une mémoire à accès aléatoire simple accès et n registres mutuellement connectés en série avec la mémoire. Cependant, la mémoire est alors apte à stocker $N/4 -(n-1)$ mots de quatre données tandis que chaque registre est apte à stocker un mot de quatre données.

Selon un mode de réalisation de l'invention, quel que soit le type de l'étage, chaque étage de traitement à radix 4 comporte une entrée pour recevoir séquentiellement au rythme d'un premier signal d'horloge les N données d'un bloc courant, ces données étant ordonnées au sein de quatre segments consécutifs contenant chacun N/4 données. Chaque donnée d'un segment forme avec les données homologues des trois autres segments un groupe de quatre données. Les moyens de traitement élémentaires de l'étage comportent alors un module additionneur/soustracteur apte à effectuer, à chaque cycle du premier signal d'horloge, un traitement du type papillon sur chacun desdits groupes ainsi formés de façon à élaborer des groupes successifs de quatre données intermédiaires respectivement ordonnées au sein de quatre segments intermédiaires consécutifs. Les moyens de traitement élémentaires comportent par ailleurs un module multiplicateur apte à multiplier, à chaque cycle du premier signal d'horloge, les données intermédiaires par des coefficients multiplicateurs prédéterminés. L'étage de traitement comporte également des moyens de commande aptes à délivrer au moyens de mémorisation élémentaires de cet étage, les données contenues au moins dans les trois premiers segments du bloc courant au fur et à mesure de leur réception. Ces moyens de commande sont également aptes à substituer respectivement certaines des données mémorisées du bloc courant par les données intermédiaires contenues dans les trois derniers segments intermédiaires. Ces moyens de commande sont également aptes, à chaque cycle du premier signal d'horloge, à redélivrer aux moyens de mémorisation élémentaires les informations extraites des moyens de mémorisation et non utilisées par le module additionneur/soustracteur ou le module multiplicateur.

Plus précisément, dans le cas d'un étage de traitement du premier type (sans recadrage des données), les moyens de commande sont

aptes à délivrer aux moyens de mémorisation élémentaires les données contenues dans les trois premiers segments au fur et à mesure de leur réception (les données contenues dans le dernier segment n'étant pas stockées),

aptes, au fur et à mesure de leur réception des données contenues dans le quatrième segment, à substituer respectivement les données mémorisées, par les données intermédiaires contenues dans les trois derniers segments intermédiaires.

Dans le cas d'un étage de traitement du deuxième type, les moyens de commande sont

aptes à délivrer aux moyens de mémorisation élémentaires les données contenues dans les quatre segments du bloc courant au fur et à mesure de leur réception, et

aptes, au fur et à mesure de la réception des données contenues dans le premier segment du bloc suivant, à substituer respectivement les données mémorisées des trois derniers segments du bloc courant, par les données intermédiaires contenues dans les trois derniers segments intermédiaires.

Selon un mode de réalisation de l'invention, et quel que soit le type de l'étage de traitement à radix 4, les moyens de mémorisation élémentaires de cet étage comportent un premier registre connecté à la sortie de la mémoire et un deuxième registre connecté à l'entrée de la mémoire. La sortie du premier registre est connectée en premier lieu à l'entrée du deuxième registre par l'intermédiaire d'un premier multiplexeur commandable, en deuxième lieu à l'entrée du module additionneur/soustracteur, et en troisième lieu à l'entrée du module multiplicateur par l'intermédiaire d'un deuxième multiplexeur commandable. La sortie du module additionneur/soustracteur est connectée d'une part à l'entrée du premier registre par l'intermédiaire du premier multiplexeur et d'autre part à l'entrée du module multiplicateur par l'intermédiaire du deuxième multiplexeur. Les moyens de commande comportent alors les deux multiplexeurs ainsi qu'un premier compteur modulo N (compteur d'écriture) cadencé par le premier signal d'horloge, réinitialisable à la réception de la première donnée de chaque bloc, et commandant le premier multiplexeur. Les moyens de commande comportent également un deuxième compteur modulo N (compteur de lecture), cadencé par le premier signal d'horloge, réinitialisable à l'émission de la première donnée de sortie de l'étage, commandant le deuxième multiplexeur. En outre, les moyens de traitement élémentaires de l'étage comprennent des moyens d'adressage de la mémoire comportant un compteur modulo N/4-1, (en l'espèce N/4-(n-1) avec n = 2 ici car il y a deux registres).

L'invention a également pour objet un procédé de commande d'un étage de traitement radix 4 d'un dispositif de calcul d'une transformée de Fourier à architecture pipelinée, dans lequel, pour chaque bloc de données reçu en entrée de l'étage, on ne stocke que trois quarts des données du bloc dans des moyens de mémorisation comportant une mémoire à accès aléatoire.

Selon un mode de mise en oeuvre, l'étage reçoit séquentiellement les N données du bloc ordonnées au sein de quatre segments consécutifs contenant chacun N/4 données, chaque donnée d'un segment formant avec les données homologues des trois autres segments un groupe de quatre données. On stocke dans les moyens de mémorisation les données contenues dans les trois premiers segments au fur et à mesure de leur réception. Et, au fur et à mesure de la réception des données contenues dans le quatrième segment, on effectue un traitement du type "papillon" sur chacun desdits groupes de façon à élaborer des groupes successifs de quatre données intermédiaires respectivement ordonnées au sein de quatre segments intermédiaires consécutifs, et on remplace respectivement les données mémorisées, par les données intermédiaires contenues dans les trois derniers segments intermédiaires.

D'autres avantages et caractéristiques de l'invention apparaîtront à l'examen de modes de réalisation de l'invention, nullement limitatifs, et des dessins annexés sur lesquels :

- la figure 1 est un synoptique schématique d'un dispositif selon l'invention à deux étages de traitement,
- la figure 2 illustre les traitements de type papillon effectués selon l'invention dans ces étages,
- la figure 3 est une représentation schématique de l'architecture matérielle d'un étage de traitement du dispositif de la figure 1,
- la figure 4 illustre plus en détail certains des moyens illustrés sur la figure 3,
- la figure 5 illustre de façon schématique des flux de données d'entrée et de sortie du dispositif prenant en compte un intervalle de garde,
- les figures 6a et 6b sont des chronogrammes temporels illustrant un cas particulier de fonctionnement d'un dispositif selon l'invention en prenant en compte un intervalle de garde entre les différents symboles à traiter,
- les figures 7a à 7d illustrent très schématiquement la configuration d'une mémoire d'un dispositif selon l'invention et la mise en oeuvre de ce dispositif dans le cas d'un recadrage de données au sein d'un étage de traitement à radix 4, et,

- la figure 8 illustre une autre variante de l'invention prévoyant une subdivision des moyens de mémorisation élémentaires.

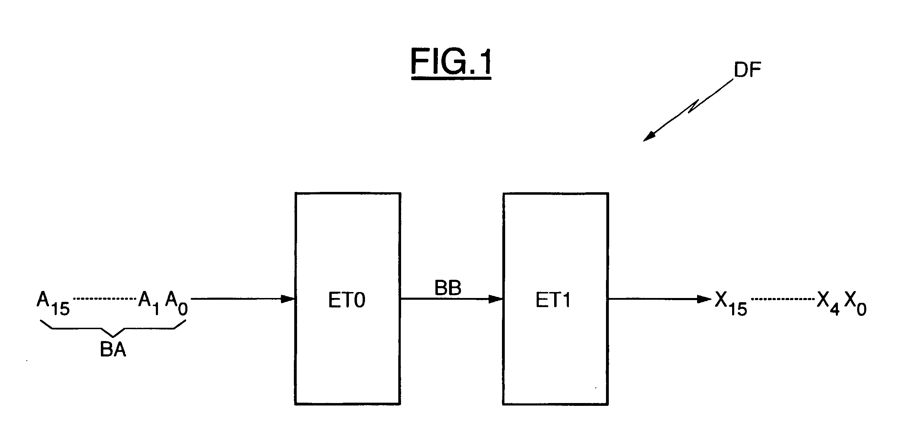

Sur la figure 1, la référence DF désigne un dispositif de calcul d'une transformée de Fourier à architecture pipelinée, capable d'effectuer une transformée de Fourier de taille initiale égale à 16 et comportant deux étages de traitement à radix 4 ET0 et ET1.

L'étage d'entrée ET0 reçoit des flots de symboles ou blocs de données BA comportant respectivement seize données $A_0$-$A_{15}$. La sortie de l'étage ET0 délivre des blocs successifs BB de quatre données qui sont traitées dans l'étage ET1. Cet étage ET1 délivre le symbole de sortie $X_{15}...X_4X_0$ correspondant au symbole d'entrée BA.

D'une façon générale, si pour un étage de traitement à radix 4, la taille du bloc de données reçu en entrée est égale à N, ce bloc de données peut être décomposé en quatre segments de N/4 données chacun, temporellement reçus consécutivement. Le premier segment est formé des données $A_i^K$, le deuxième segment est formé des données $A_{N/4+i}^K$, le troisième segment est formé des données $A_{N/2+i}^K$ et le quatrième segment est formé des données $A_{3N/4+i}^K$, i variant de 0 à N/4 - 1, et représentant le nombre de traitements du type papillon effectué dans l'étage sur chaque bloc de données reçu. K représente le $K^{ème}$ bloc reçu par l'étage.

Par ailleurs, l'homme du métier sait que si s désigne le rang de l'étage considéré, N est égal à $N0/4^s$ où N0 désigne la taille initiale de la transformée de Fourier, c'est-à-dire la taille de chaque symbole reçu par l'étage d'entrée.

En outre, si l'étage considéré est le premier, le $K^{ème}$ bloc correspond au $K^{ème}$ symbole reçu.

Par contre, si l'étage considéré n'est pas le premier (rang s différent de 0), chaque symbole en entrée du dispositif se décompose récursivement au sein de chaque étage en $4^s$ blocs K (K variant de 0 à $4^s$-1).

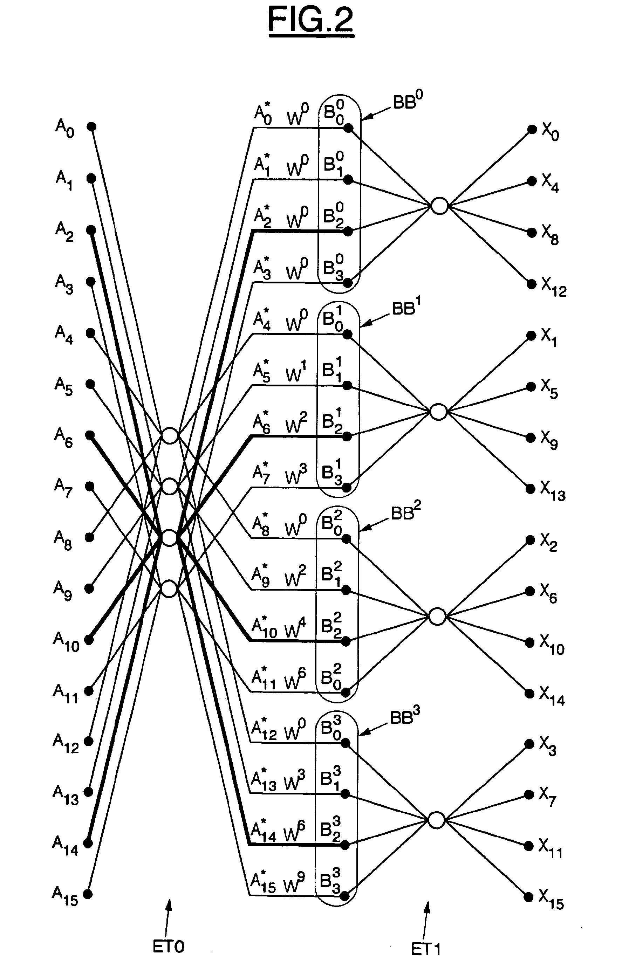

La figure 2 illustre le cas particulier des seize données (N=16) de chaque bloc reçu par l'étage ET0.

L'étage de traitement à radix 4 effectue alors N/4 traitements du type papillon sur N/4 groupes distincts de quatre données formés respectivement par une donnée du premier segment et les données homologues des trois autres segments.

Dans l'exemple particulier de la figure 2, l'étage ET0 effectue un premier traitement de type papillon sur le groupe formé des données $A_0$, $A_4$, $A_8$ et $A_{12}$, un deuxième traitement du type papillon sur un deuxième groupe de données formé des données $A_1$, $A_5$, $A_9$ et $A_{13}$ et ainsi de suite jusqu'à un quatrième traitement de type papillon sur le quatrième groupe de données formé des données $A_3$, $A_7$, $A_{11}$ et $A_{15}$.

Le résultat de ces traitements de type papillon sont des données intermédiaires également ordonnées au sein de quatre segments intermédiaires contenant chacun N/4 données intermédiaires.

Plus précisément, le premier segment intermédiaire contient les données intermédiaires $A_i^{K*}$, le deuxième segment intermédiaire contient les données intermédiaires $A_{N/4+i}^{K*}$, le troisième segment intermédiaire contient les données $A_{N/2+i}^{K*}$ et le quatrième segment intermédiaire contient les données $A_{3N/4+i}^{K*}$.

Ces données intermédiaires sont obtenues selon les formules (I) à (IV) suivantes :

$$A_i^{K*} = A_i^K + A_{N/4+i}^K + A_{N/2+i}^K + A_{3N/4+i}^K \qquad (I)$$

$$A_{N/4+i}^{K*} = A_i^K - A_{N/4+i}^K + A_{N/2+i}^K - A_{3N/4+i}^K \qquad (II)$$

$$A_{N/2+i}^{K*} = A_i^K - j\ A_{N/4+i}^K - A_{N/2+i}^K + j\ A_{3N/4+i}^K \qquad (III)$$

$$A_{3N/4+i}^{K*} = A_i^K + j\ A_{N/4+i}^K - A_{N/2+i}^K - j\ A_{3N/4+i}^K \qquad (IV).$$

Dans ces formules, j désigne le nombre complexe dont le carré est égal à -1, et i varie de 0 à N/4-1.

Ces données intermédiaires sont ensuite multipliées par des coefficients prédéterminés $W^0$ (c'est-à-dire 1), $W^i$, $W^{2i}$ et $W^{3i}$ selon les segments considérés. Ces coefficients sont des coefficients complexes classiques bien connus de l'homme du métier.

Après multiplication par ces coefficients W, on obtient, en sortie de l'étage de traitement, quatre blocs $BB^{4K}$, $BB^{4K+1}$, $BB^{4K+2}$, $B_i^{4K+3}$ contenant respectivement N/4 données de sortie, $B_i^{4K}$, $B_i^{4K+1}$, $B_i^{4K+2}$ et $B_i^{4K+3}$, avec i variant de 0 à N/4-1.

Tous les blocs BB seront alors traités consécutivement par les moyens de traitement élémentaires du deuxième étage ET1, chacun de ces blocs étant considéré comme un symbole d'entrée pour ce deuxième étage.

Ainsi, sur la figure 2, les moyens de traitement élémentaires vont successivement effectuer un traitement de type papillon sur les quatre données de chaque bloc d'entrée BB, de façon à obtenir des données intermédiaires B*, puis des données de sortie qui sont en fait, dans le cas présent, le résultat de la transformée de Fourier des données d'entrée A.

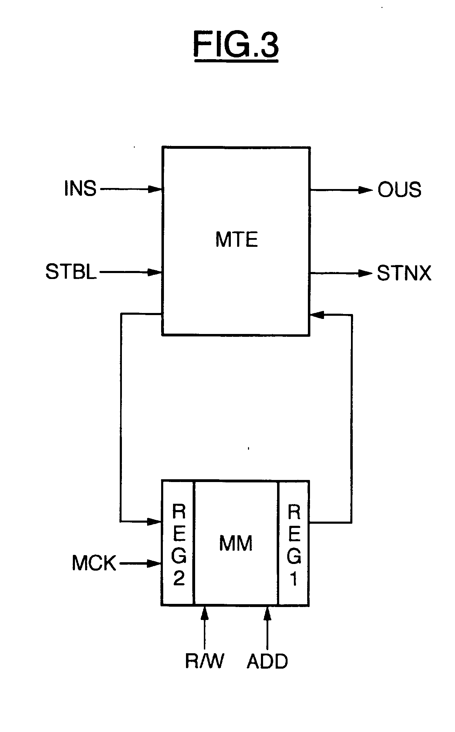

Sur la figure 3, la référence MTE désigne les moyens de traitement élémentaires d'un étage de traitement radix 4 du dispositif DF. Ces moyens MTE comportent une borne d'entrée recevant le flux INS des différents blocs de données provenant soit d'un moyen extérieur au dispositif si l'étage considéré est le premier (dans ce cas les différents blocs représentent les différents symboles sur lesquels va s'effectuer la transformée de Fourier), soit de l'étage précédent. Les données contenues dans chacun des blocs reçus sont délivrées au rythme d'un premier signal d'horloge SMCK. Les moyens de traitement MTE sont, quant à eux, cadencés par un signal d'horloge de base MCK dont la fréquence est soit deux fois plus importante que la fréquence du signal SMCK, soit quatre fois plus importante selon que les moyens de traitement MTE reçoivent au cours de chaque cycle du signal SMCK soit la partie réelle et la partie imaginaire de chaque donnée, soit uniquement la partie réelle ou la partie imaginaire.

Le flot des données de sortie OUS est délivré à une borne de sortie de cet étage de traitement.

Par ailleurs, les moyens de traitement élémentaires MTE reçoivent un premier signal de contrôle STBL provenant soit de moyens extérieurs du dispositif si l'étage considéré est le premier, soit de l'étage précédent. Ce signal STBL indique, par exemple lors de son passage à l'état "1", la réception de la première donnée d'un bloc. De même, les moyens MTE délivrent à l'étage suivant un deuxième signal de contrôle STNX indiquant, par exemple lors de son passage à l'état "1", l'émission de la première donnée de sortie issue du traitement dudit bloc d'entrée. Le signal STBL reçu par l'étage courant est alors le signal STNX émis par l'étage précédent.

Outre ces moyens de traitement élémentaires, l'étage de traitement radix 4 comporte des moyens de mémorisation élémentaires composés ici d'une mémoire à accès aléatoire simple accès MM rebouclée sur les moyens de traitement élémentaires MTE par l'intermédiaire d'un premier registre ou bascule REG1 connecté sur la sortie de la mémoire MM, et par l'intermédiaire d'un deuxième registre ou bascule REG2 connecté sur l'entrée de la mémoire MM. La mémoire MM est commandée en écriture/lecture par un signal R/W. Lorsque ce signal vaut "1" par exemple, il s'agit d'une lecture et lorsqu'il vaut "0", il s'agit d'une écriture. Par ailleurs, la mémoire est adressée par un pointeur d'adresse ADD. A chaque cycle du signal d'horloge de base MCK, s'effectue soit un accès en écriture, soit un accès en lecture de la mémoire MM. De ce fait, à chaque cycle du premier signal d'horloge SMCK s'effectue un accès en lecture suivi d'un accès en écriture de la mémoire.

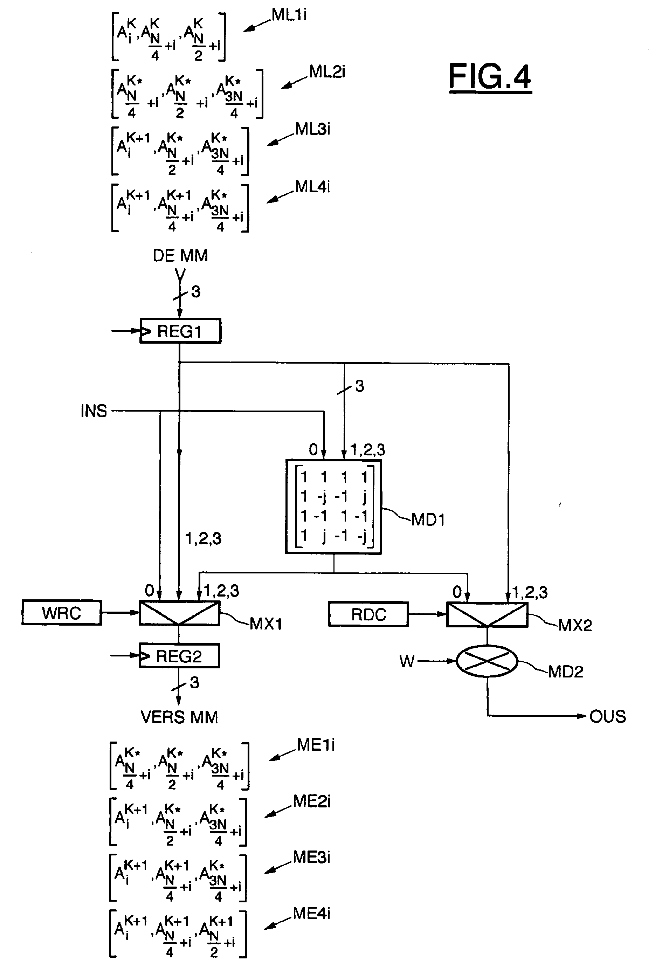

On suppose maintenant, en se référant plus particulièrement à la figure 4, que l'étage de traitement à radix 4 est d'un premier type au sein duquel on n'effectue pas de calculs de dynamique des données.

Dans ce cas, la capacité de stockage des moyens de mémorisation élémentaires de l'étage de traitement est égale à 3N/4 données. Compte tenu de la présence des deux niveaux de pipeline, c'est-à-dire des deux registres REG1 et REG2, la capacité de stockage de la mémoire est égale à N/4-1 mots de trois données tandis que chaque registre REG1, REG2 est apte à stocker un mot de trois données. La mémoire MM peut donc se représenter comme une matrice de N/4-1 lignes et de 3 colonnes.

Les moyens de traitement élémentaires comportent un module additionneur/soustracteur MD1 permettant de calculer les données intermédiaires selon les formules (I) à (IV) ci-avant, ainsi qu'un module multiplicateur MD2 permettant de multiplier ces données intermédiaires par les coefficients appropriés W. La sortie du module multiplicateur délivre donc le flot de données de sortie OUS.

Les quatre sorties 0, 1, 2, 3 du module MD1 délivrent respectivement les données intermédiaires $A_i^{K*}$, $A_{N/4+i}^{K*}$, $A_{N/2+i}^{K*}$, $A_{3N/4+i}^{K*}$ des quatre segments intermédiaires.

La borne d'entrée de l'étage, recevant le flot INS des données d'entrée, ainsi que les trois sorties 1, 2, 3 du premier registre REG1 sont respectivement connectées sur les quatre entrées 0, 1, 2, 3 du module additionneur MD1.

La borne d'entrée de cet étage est par ailleurs reliée à l'entrée 0 d'un premier multiplexeur à quatre entrées MX1 dont les trois sorties sont reliées aux trois entrées du registre REG2.

Les trois autres entrées 1, 2 et 3 du premier multiplexeur MX 1 sont à la fois reliées aux trois sorties 1, 2, 3 du registre REG1 et aux trois sorties 1, 2 et 3 du module MD1.

La sortie 0 du module MD1 est reliée à l'entrée 0 d'un deuxième multiplexeur MX2 à quatre entrées dont la sortie est reliée à l'entrée du module multiplicateur MD2. Les trois autres entrées 1, 2 et 3 du deuxième multiplexeur sont reliées aux trois sorties du premier registre REG1.

Les données de chaque bloc d'entrée sont indexées par un premier compteur (compteur d'écriture) WRC modulo N et comptant de 0 à N-1 par exemple à la fréquence du premier signal d'horloge SMCK. De même, les données de sortie sont indexées de 0 à N-1 par un deuxième compteur modulo N, ou compteur de lecture RDC, comptant également par exemple de 0 à N-1 à la fréquence du premier signal d'horloge.

A cet égard, il convient de noter que la montée à 1 du premier signal de contrôle STBL, indiquant la réception de la première donnée du bloc, réinitialise le compteur WRC tandis que la montée à 1 du deuxième signal de contrôle STNX signalant l'émission de la première donnée de sortie, réinitialise le compteur de lecture RDC. L'homme du métier aura par ailleurs remarqué que, selon l'invention, le deuxième signal de contrôle STNX passe à l'état 1 lorsque le premier compteur WRC atteint la valeur 3N/4-1.

Le compteur d'écriture WRC commande le premier multiplexeur MX1.

Plus précisément, lorsque le compteur WRC compte de 0 à N/4-1, les trois entrées 1, 2, 3 du registre REG2 reçoivent respectivement la donnée disponible à l'entrée de l'étage, et les valeurs disponibles aux sorties 2 et 3 du registre REG1.

Lorsque le compteur WRC compte de N/4 à N/2-1, les trois entrées 1, 2, 3 du registre REG2 reçoivent respectivement la valeur disponible à la sortie 1 du registre REG1, la donnée disponible à l'entrée de l'étage de traitement et la valeur disponible à la sortie 3 du registre REG1.

Lorsque le compteur WRC compte de N/2 à 3N/4-1, les entrées 1, 2 et 3 du registre REG2 reçoivent respectivement la valeur délivrée à la sortie 1 du registre REG1, la valeur délivrée à la sortie 2 du registre REG1, et la donnée disponible à l'entrée de l'étage de traitement.

Enfin, lorsque le compteur WRC compte de 3N/4 à N-1, les trois entrées 1, 2 et 3 du registre REG2 reçoivent respectivement les valeurs délivrées par les sorties 1, 2 et 3 du module MD1.

Le registre REG2 stocke alors les trois données qui seront écrites au cycle d'horloge suivant dans la mémoire MM.

Le compteur RDC commande le multiplexeur MX2.

Plus précisément, lorsque le compteur RDC compte de 0 à N/4-1 , le module multiplicateur MD2 recevra la valeur délivrée par la sortie 0 du module MD1.

Lorsque le compteur RDC compte de N/4 à N/2-1, le module MD2 recevra la valeur disponible à la sortie 1 du registre REG1.

Lorsque le compteur RDC compte de N/2 à 3N/4-1, le module MD2 recevra la valeur disponible à la sortie 2 du registre REG1.

Lorsque le compteur RDC compte de 3N/4 à N-1, le module MD2 recevra la valeur disponible à la sortie 3 du registre REG1.

Les valeurs des sinus et cosinus des coefficients complexes W, qui seront utilisées dans le module MD2, sont par exemple stockées dans une mémoire morte adressée par le compteur de lecture RDC.

Le signal d'adresse ADD de la mémoire MM est délivré par un compteur modulo N/4-1 (non représenté ici à des fins de simplification) et comptant par exemple de 0 à N/4-2 à la fréquence du premier signal d'horloge SMCK.

On va maintenant décrire plus en détail, toujours en se référant plus particulièrement à la figure 4 (et en supposant en outre dans un premier temps à des fins de simplification, qu'aucun intervalle de garde ne sépare deux symboles consécutifs en entrée du dispositif de calcul) le remplissage de la mémoire MM ainsi que le mode de fonctionnement des moyens de traitement élémentaires de cet étage.

On suppose maintenant que la mémoire MM contient les données $A_i^K$, $A_{N/4+i}^K$, et $A_{N/2+i}^K$ des trois premiers segments du bloc K qui ont été stockés au fur et à mesure de leur réception, c'est-à-dire au fur et à mesure que le compteur WRC comptait de 0 à 3N/4-1. Ici et dans la suite du texte, i varie de 0 à N/4-1 au rythme du compteur WRC.

Lorsque le compteur WRC compte ensuite de 3N/4 à N-1, l'étage reçoit successivement en entrée les données $A_{3N/4+i}^K$ du quatrième segment du bloc. Cependant, ces données ne sont pas stockées dans la mémoire MM et sont utilisées avec les données homologues des trois premiers segments pour calculer les données intermédiaires $A_i^{K^*}$, $A_{N/4+i}^{K^*}$, $A_{N/2+i}^{K^*}$ et $A_{3N/4+i}^{K^*}$ des quatre segments intermédiaires.

Cependant, les données intermédiaires $A_i^{K^*}$ du premier segment intermédiaire ne sont pas stockées dans la mémoire MM et sont directement transmises au module multiplicateur MD2.

Par contre, au fur et à mesure de la réception des données du quatrième segment du bloc K, les données mémorisées dans la mémoire MM et relatives aux trois premiers segments du bloc K sont respectivement remplacées par les données intermédiaires calculées par le module MD1 et relatives aux trois derniers segments intermédiaires.

En d'autres termes, si l'on se réfère à nouveau à la figure 4, lorsque le compteur compte de 3N/4 à N-1, les mots ML1i sont extraits de la mémoire tandis que les mots ME1i vont être mémorisés dans la mémoire via le registre REG2.

A l'étape suivante, c'est-à-dire lorsque le compteur WRC compte de 0 à N/4-1 correspondant à la réception des données du premier segment du bloc K+1, on extrait successivement de la mémoire les mots ML2i (i variant de 0 à N/4-1) correspondant aux mots précédents d'écriture ME1i. On délivre au module multiplicateur MD2 les données intermédiaires du deuxième segment du bloc K et on restocke dans la mémoire MM des mots d'écriture ME2i contenant toujours les données intermédiaires des deux derniers segments du bloc K mais également les données du premier segment du bloc K+1 qui ont été substituées aux données intermédiaires du deuxième segment du bloc K.

Un fonctionnement analogue s'effectue lorsque le compteur compte de N/4 à N/2-1 avec les mots de lecture ML3 et ME3 (i variant toujours de 0 à N/4-1) puis avec les mots de lecture ML4 et ME4 lorsque le compteur compte de N/2 à 3N/4-1.

A l'issue de cette étape, la mémoire MM contient à nouveau les données des trois premiers segments du bloc K+1 et un nouveau cycle complet d'écriture/lecture peut recommencer.

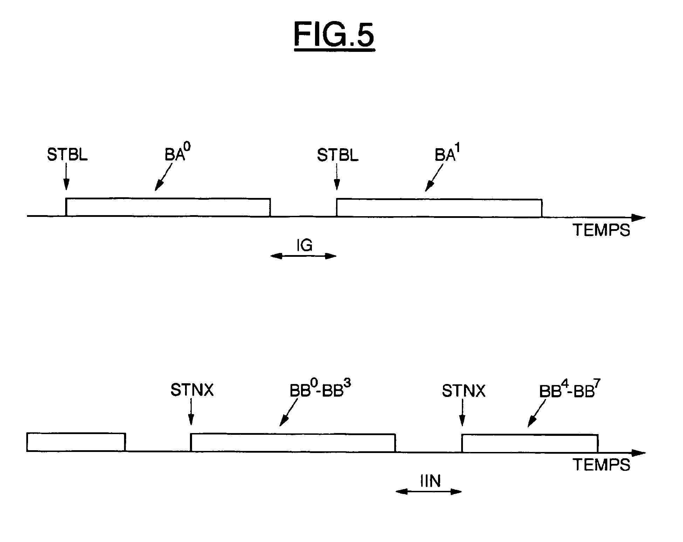

Dans certaines applications, notamment dans les récepteurs de télévision numérique, les différents symboles reçus en entrée du dispositif de calcul DF sont mutuellement espacés d'un intervalle de garde IG (figure 5) constitué d'un nombre plus ou moins grand de données, qui peuvent être la recopie de certaines données du symbole suivant l'intervalle de garde.

La figure 5 illustre le flot de symboles reçus par un étage d'entrée à radix 4. Chaque symbole est un bloc de seize données. La partie haute de la figure 5 représente les deux premiers blocs reçus $BA^0$ et $BA^1$ séparés par l'intervalle de garde IG et dont les premières données respectives sont identifiées par la montée à 1 du signal STBL.

La partie basse de la figure 5 illustre les blocs de sortie BB correspondants. Ainsi, les blocs $BB^0$ - $BB^3$ repérés par le signal STNX correspondent au bloc $BA^0$ tandis que les blocs $BB^4$ - $BB^7$ correspondent au bloc $BA^1$. Le bloc $BB^4$ est séparé du bloc $BB^3$ par des données IIN qui ont été calculées avec celles de l'intervalle de garde et qui n'ont donc aucune signification physique.

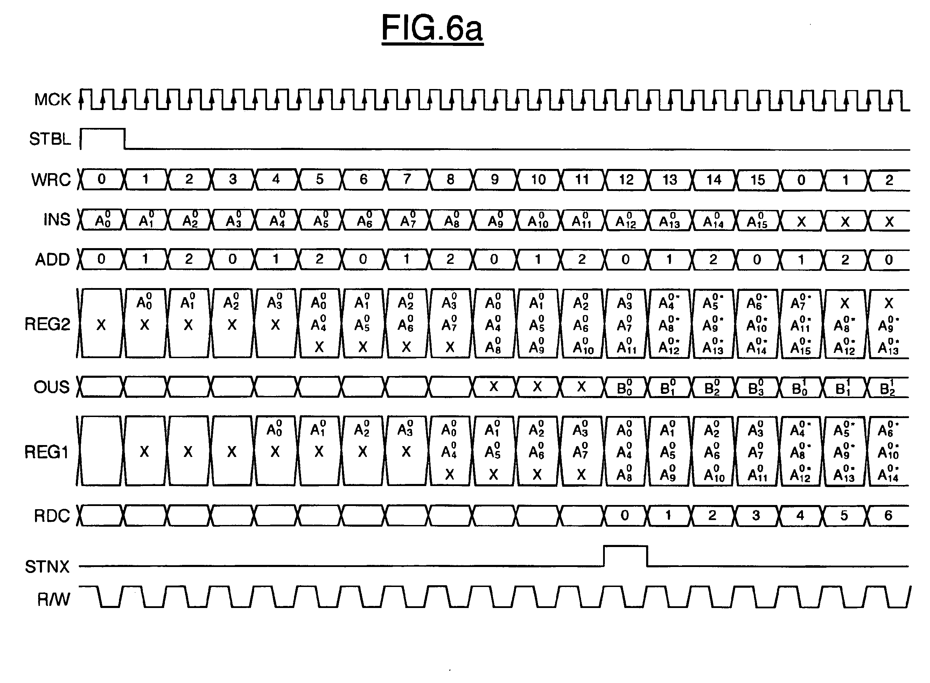

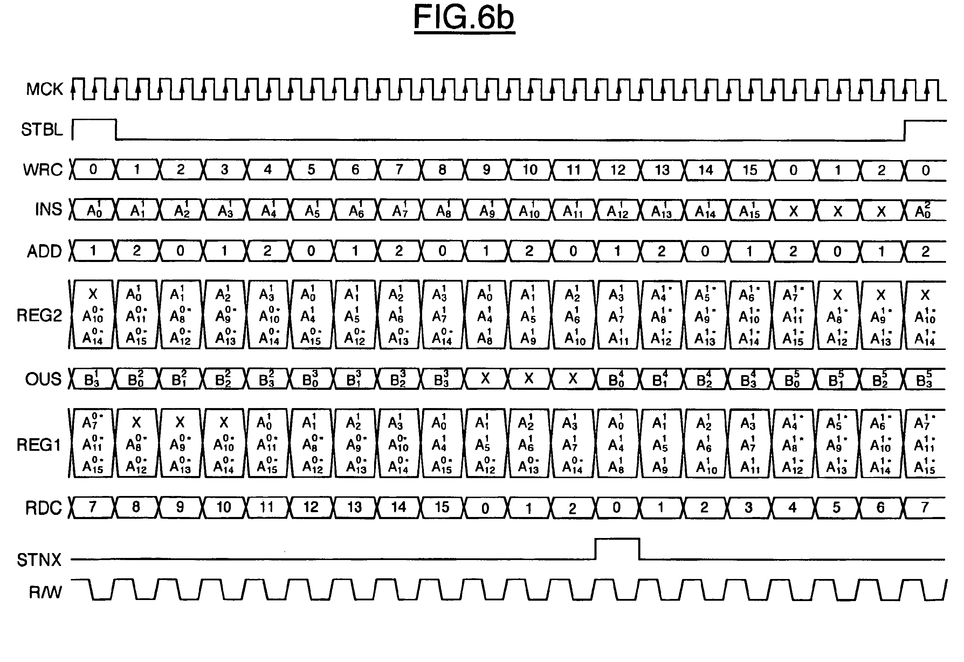

Les figures 6a et 6b représentent le chronogramme temporel correspondant au traitement des blocs $BA^0$ et $BA^1$ dans l'étage d'entrée en accord avec le mode de fonctionnement décrit en référence à la figure 4. Il convient de noter ici que la ligne REG2 représente sur ces figures le contenu valide en sortie du registre REG2, ce qui explique le décalage à droite d'un cycle d'horloge par rapport à la valeur du compteur WRC.

Ceci étant, pour tenir compte de la présence de l'intervalle de garde que l'on suppose être constitué dans cet exemple de trois données X, X, X, il convient, pour chaque cycle du compteur WRC allant de 0 à N/2-1, et débutant à chaque montée du signal STBL, de remplacer dans les mots ME2, ME3, ML3 et ML4 de la figure 4 l'indice i par l'indice (i+x) modulo N/4 où x désigne le nombre de données de l'intervalle de garde. Par contre, ces mots ME2, ME3, ML3 et ML4, tels que décrits sur la figure 4, restent exacts lorsque le compteur WRC est de lui même réinitialisé à 0 lors de la réception de la première donnée de l'intervalle de garde, mais sans que le signal STBL n'ait pris l'état 1.

Ceci est illustré clairement sur les chronogrammes des figures 6a et 6b sur lesquels le premier cycle de comptage du compteur WRC de 0 à 15 (figure 6a) correspond à une phase de remplissage initiale de la mémoire MM.

Lorsqu'il est nécessaire d'effectuer au sein d'un étage de traitement à radix 4 une évaluation de la dynamique des données afin d'effectuer un recadrage de ces dernières, la capacité de stockage de la mémoire MM est augmentée d'une colonne. De même, la capacité de stockage des registres REG1 et REG2 est augmentée d'une donnée.

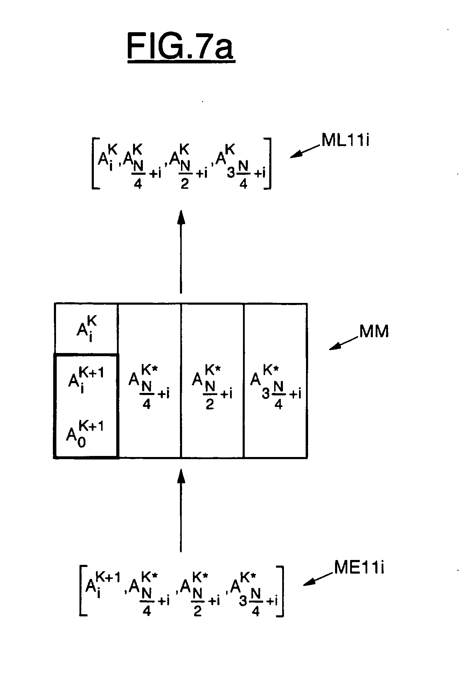

L'architecture matérielle d'un tel étage de traitement est alors analogue à celle illustrée sur la figure 4. Bien entendu, l'homme du métier saura aisément modifier les multiplexeurs ainsi que la commande associée et l'adressage de la matrice MM compte tenu du mode de fonctionnement et de remplissage de cette matrice qui vont maintenant être décrits plus en détail en se référant plus particulièrement aux figures 7a à 7d.

D'une façon générale, dans ce mode de réalisation, la mémoire MM stocke toutes les données des quatre segments d'un bloc courant K. On suppose que ceci a été réalisé juste avant l'étape illustrée sur la figure 7a.

Sur cette figure, au fur et à mesure de la réception des données du premier segment du bloc suivant K+1, les mots ML11i contenant les données des quatre segments du bloc K sont lus tandis que les mots ME11i contenant les données du premier segment du bloc suivant K+1 ainsi que les données intermédiaires des trois derniers segments intermédiaires du bloc K sont stockés dans la mémoire MM. (Il convient de noter ici que la lecture des données des quatre segments du bloc K a permis d'effectuer un recadrage de ces données (d'une façon connue en soi), par exemple par division par la valeur maximale, les données intermédiaires ayant ensuite été calculées sur ces données recadrées. A des fins de simplification, on n'a pas représenté ces moyens de calcul de dynamique et de recadrage). Plus précisément, les données du premier segment du bloc suivant K+1 se substituent dans la première colonne aux données du premier segment du bloc K tandis que les données intermédiaires des trois derniers segments intermédiaires du bloc K se substituent dans les trois autres colonnes de la matrice, aux données des trois derniers segments du bloc K.

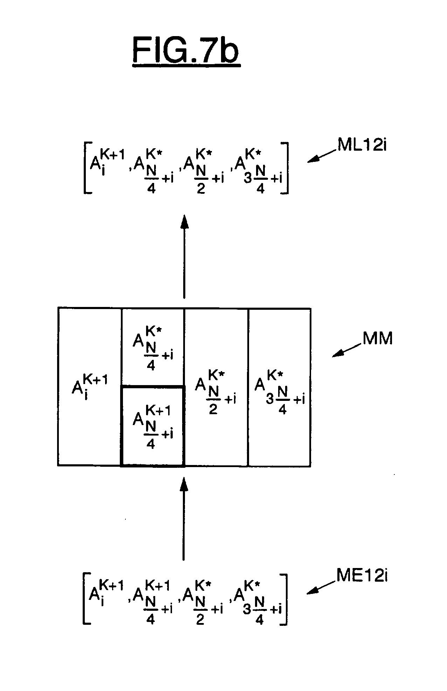

A l'étape suivante (fig. 7b), c'est-à-dire lorsque le compteur compte de N/4 à N/2-1, les mots ML12i sont extraits de la mémoire et les données du deuxième segment du bloc suivant K+1 se substituent aux données intermédiaires du deuxième segment du bloc K, les autres données intermédiaires étant réécrites dans la mémoire MM (mots d'écriture ME12i).

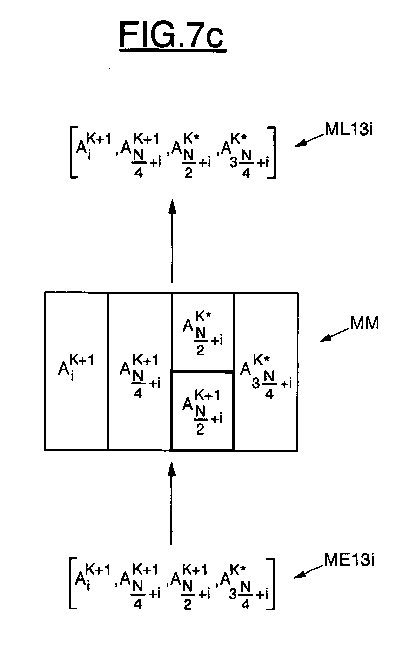

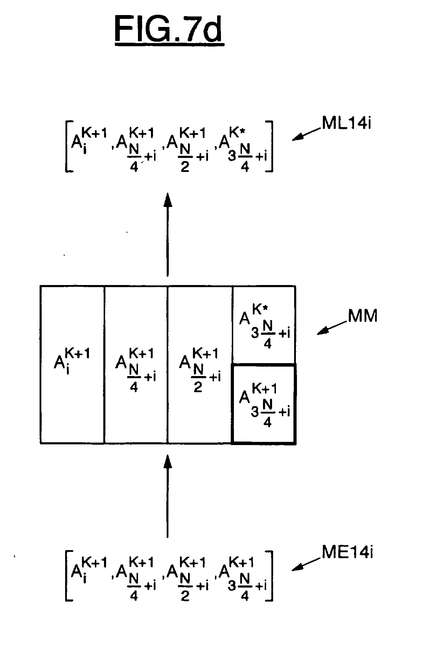

On répète ainsi l'opération pour les troisième et quatrième segments du bloc K+1 (figure 7c, figure 7d) avec les mots ML13i ME13i et ML14i et ME14i.

A l'issue de l'étape représentée sur la figure 7d, la mémoire contient toutes les données du bloc suivant K+1 permettant un nouveau calcul sur des données recadrées.

On va maintenant décrire une autre variante de l'invention particulièrement intéressante d'un point de vue consommation électrique. Plus précisément, d'une façon générale, selon cette variante, on partitionne la mémoire MM de façon à accéder uniquement la partie utile. En effet, comme on l'a vu dans les variantes précédentes, on redélivre aux moyens de mémorisation élémentaires, les informations extraites de ces moyens de mémorisation et non utilisées par le module additionneur/soustracteur ou le module multiplicateur. La présente variante de l'invention élimine de tels extractions et restockages en prévoyant que les moyens de mémorisation élémentaires d'un étage de traitement d'un premier type (c'est-à-dire sans recadrage des données) comportent trois mémoires élémentaires distinctes ayant chacune une capacité de stockage égale à N/4 données de façon à stocker chacune N/4 mots de une donnée tandis que les moyens de mémorisation élémentaires d'un étage de traitement d'un deuxième type (c'est-à-dire avec recadrage des données) comporte 4 mémoires élémentaires distinctes ayant chacune une capacité de stockage égale à N/4 données, de façon à stocker également chacune N/4 mots de une donnée. Par ailleurs, ces mémoires élémentaires distinctes sont sélectionnables et adressables sélectivement en lecture et en écriture.

Tout ce qui a été décrit précédemment quant au fonctionnement des moyens de traitement élémentaires d'un étage de traitement à radix 4 s'applique également à la présente variante. Par contre, d'une façon générale selon cette variante, les moyens de commande d'un tel étage de traitement radix 4 sont aptes à adresser sélectivement en lecture l'une au moins des mémoires élémentaires, à adresser sélectivement en écriture l'une au moins des mémoires élémentaires, la lecture et l'écriture s'effectuant à la même adresse dans chacune des mémoires élémentaires sélectionnées, de façon à délivrer sélectivement aux mémoires élémentaires les données contenues au moins dans les trois premiers segments du bloc courant au fur et à mesure de leur réception et à substituer respectivement et sélectivement certaines des données mémorisées du bloc courant par les données intermédiaires contenues dans les trois derniers segments intermédaires.

On verra plus en détails ci-après que selon les cas, on peut adresser en lecture et en écriture toutes les mémoires élémentaires à la fois. On peut également adresser l'une des mémoires élémentaires en lecture et la même mémoire en écriture. On peut encore adresser l'une des mémoires élémentaires en lecture et une autre mémoire élémentaire en écriture. Mais de toute façon, l'adresse de lecture et d'écriture sera identique pour chacune des mémoires élémentaires sélectionnées.

En pratique, la valeur du premier compteur WRC détermine celle ou celles des mémoires élémentaires à sélectionner et adresser en écriture, tandis que la valeur du deuxième compteur RDC détermine celle ou celles des mémoires élémentaires à sélectionner et adresser en lecture. On va maintenant décrire plus en détails en se référant plus particulièrement aux figures 4, 6a, 6b et 8, le fonctionnement du dispositif selon cette variante de l'invention.

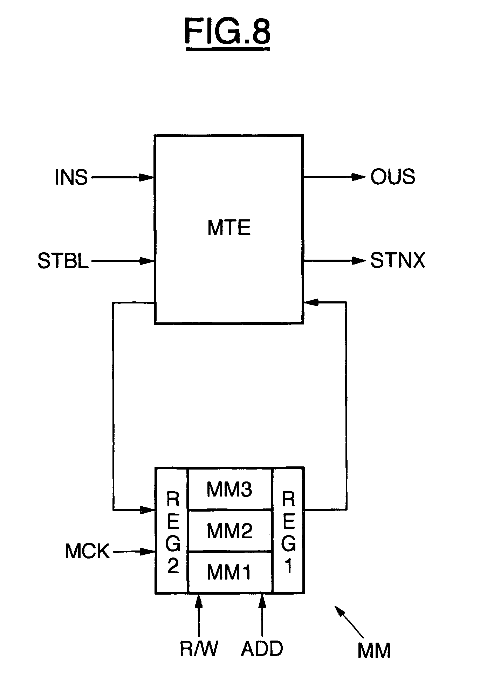

On suppose ici que l'étage de traitement est un étage de traitement du premier type, c'est-à-dire sans recadrage des données. Dans ce cas, comme illustré sur la figure 8, les moyens de mémorisation élémentaires de l'étage de traitement MM se composent de trois mémoires distinctes MM1, MM2 et MM3, par exemple simple accès.

On suppose dans cet exemple, que la première donnée de chacun des mots ME1i-ME4i est stockée dans la première mémoire élémentaire MM1 tandis que les deuxième et troisième données de ces mots d'écriture sont respectivement stockées dans les deuxième et troisième mémoires élémentaires MM2 et MM3. De même, les première, deuxième et troisième données de chacun des mots de lecture ML1i-ML4i sont respectivement lues dans les première deuxième et troisième mémoires élémentaires MM1, MM2 et MM3.

L'adresse d'écriture ou de lecture dans ces mémoires élémentaires est définie par le compteur d'adresse ADD qui est ici un compteur modulo N/4.

La commande des multiplexeurs MX1 et MX2 par la valeur des compteurs WRC et RDC est analogue à celle qui a été décrite précédemment pour les autres variantes de l'invention.

Lorsque le compteur RDC compte de 0 à N/4-1, on adresse en lecture les trois mémoires élémentaires et on lit les trois données du mot ML1i à l'adresse @ définie par le compteur ADD.

Lorsque le compteur RDC compte de N/4 à N/2-1, on adresse en lecture la première mémoire élémentaire MM1 et on lit la première donnée du mot ML2i à l'adresse définie par le compteur ADD, c'est-à-dire la donnée $A_{N/4+i}^{K*}$.

Lorsque le compteur RDC compte de N/2 à 3N/4-1, on adresse uniquement en lecture la deuxième mémoire élémentaire MM2 pour y lire la deuxième donnée du mot ML3i.

Enfin, lorsque le compteur RDC compte de 3N/4 à N-1, on adresse la troisième mémoire élémentaire MM3 pour y lire la troisième donnée du mot ML4i à l'adresse définie par le compteur ADD.

Parallèlement, lorsque le compteur WRC compte de 3N/4 à N-1, on adresse en écriture les trois mémoires MM1-MM3 pour y stocker respectivement les trois données du mot ME1i. L'adresse de stockage est la même pour les trois mémoires élémentaires et est également la même que l'adresse de lecture des mémoires sélectionnées par le compteur RDC.

Lorsque le compteur WRC compte de 0 à N/4-1, on adresse uniquement en écriture la première mémoire élémentaire MM1 pour y stocker la première donnée du mot ME2i.

Lorsque le compteur WRC compte de N/4 à N/2-1, on adresse la deuxième mémoire élémentaire MM2 en écriture pour y stocker la deuxième donnée du mot ME3i et lorsque le compteur WRC compte de N/2 à à 3N/4-1, on adresse uniquement en écriture la troisième mémoire élémentaire pour y stocker la troisième donnée du mot ME4i.

En outre, d'une façon générale, au cours d'un cycle, on va d'abord adresser en lecture la ou les mémoires élémentaires désignées par la valeur du compteur RDC. On va lire la ou les données dans ces mémoires à l'adresse @ définie par la valeur du compteur ADD puis, on va adresser en écriture la ou les mémoires désignées par la valeur du compteur WRC et on va écrire la ou les données correspondantes dans ces mémoires sélectionnées à la même adresse @ que l'adresse de lecture.

En présence d'un intervalle de garde, il est nécessaire, en outre, que les moyens de commande soient aptes à mémoriser l'adresse d'écriture lors de la réception de la première donnée de chaque bloc, c'est-à-dire à la montée du signal STBL. Les moyens de commande vont alors réutiliser cette adresse lorsque la valeur du premier compteur WRC atteint la valeur 3N/4. En d'autres termes, on mémorise l'adresse du début de chaque symbole écrit (l'adresse de la première donnée de chaque bloc) et on va rechercher cette adresse lorsque le compteur WRC atteint la valeur 3N/4.

Tout ce qui vient d'être décrit ici s'applique également au fonctionnement d'un étage de traitement du deuxième type (c'est-à-dire avec recadrage des données) dont le fonctionnement général a été décrit en référence aux figure 7a à 7b. Le nombre de mémoires élémentaires est alors égal à quatre.

Bien entendu, tout ce qui vient d'être décrit se généralise à des dispositifs électronique de calcul de transformées de Fourier de grande taille initiale. Ainsi, dans les applications de télévision numérique nécessitant d'effectuer des transformées de Fourier de 8192 points, on prévoit six étages radix 4 suivis d'un étage terminal radix 2 classique. Le premier étage radix 4, c'est-à-dire l'étage d'entrée, n'effectue pas de recadrage de données. Par contre, les autres étages effectuent cette opération de recadrage.

Dans le cas où une mémoire double accès serait utilisée à la place d'une mémoire simple accès, la fréquence du signal d'horloge MCK serait égale à la fréquence du signal d'horloge SMCK (si les parties imaginaire et réelle de chaque donnée sont reçues à chaque cycle du signal SMCK) et l'adresse de lecture de la mémoire MM serait alors prise égale à l'adresse d'écriture diminuée de 1.

**Revendications**

1. Dispositif électronique de calcul d'une transformée de Fourier à architecture pipelinée, **caractérisé par le fait qu'**il comprend au moins un étage de traitement (ET0) à radix égal à 4 comportant des moyens de traitement élémentaires (MTE) effectuant des traitements de transformées de Fourier de taille élémentaire égale à 4 sur des blocs de données, ainsi que des moyens de mémorisation élémentaires comportant une mémoire à accès aléatoire (MM), en particulier une mémoire simple accès.

2. Dispositif selon la revendication 1, **caractérisé par le fait que** les moyens de traitement élémentaires (MTE) de l'étage à radix 4 effectuent respectivement N/4 traitements du type "papillon" sur N/4 groupes distincts de quatre données de chaque bloc de données traité par cet étage, N étant la taille dudit bloc.

3. Dispositif selon la revendication 1 ou 2, **caractérisé par le fait que** les étages de traitement à radix égal à 4 comprennent au moins un étage de traitement d'un premier type dont les moyens de mémorisation élémentaires (MM) ont une capacité de stockage égale à 3N/4 données, N étant la taille des blocs de données traités par ledit étage du premier type.

4. Dispositif selon la revendication 3, **caractérisé par le fait que** les moyens de mémorisation élémentaires de l'étage de traitement du premier type comprennent une mémoire à accès aléatoire, en particulier simple accès, et n registres (REG1, RGE3) mutuellement connectés en série avec la mémoire (MM), **par le fait que** la mémoire est apte à stocker (N/4) - (n - 1) mots de trois données, et **par le fait que** chaque registre est apte à stocker 1 mot de trois données.

5. Dispositif selon l'une des revendications précédentes, **caractérisé par le fait que** les étages de traitement à radix égal à 4 comprennent au moins un étage de traitement d'un deuxième type dont les moyens de mémorisation élémentaire (MM) ont une capacité de stockage égale à N, N étant la taille des blocs de données traités par ledit étage, et **par le fait que** les moyens de traitement élémentaires (MTE) de cet étage du deuxième type comportent des moyens aptes à déterminer la dynamique des données de chaque bloc traité et à effectuer un recadrage de ces données compte tenu de ladite dynamique.

6. Dispositif selon la revendication 5, **caractérisé par le fait que** les moyens de mémorisation élémentaires de l'étage de traitement d'un deuxième type comprennent une mémoire à accès aléatoire, en particulier simple accès, et n registres (REG1, REG2) mutuellement connectés en série avec la mémoire, **par le fait que** la mémoire est apte à stocker (N/4) - (n - 1) mots de quatre données, et **par le fait que** chaque registre est apte à stocker 1 mot de quatre données.

**7.** Dispositif selon l'une des revendications précédentes, **caractérisé par le fait que** chaque étage de traitement à radix 4 comporte une entrée pour recevoir séquentiellement au rythme d'un premier signal d'horloge (SMCK) les N données d'un bloc courant ordonnées au sein de quatre segments consécutifs contenant chacun N/4 données, chaque donnée d'un segment formant avec les données homologues des trois autres segments un groupe de quatre données, **par le fait que** les moyens de traitement élémentaires (MTE) comportent un module additionneur/soustracteur (MD1) apte à effectuer, à chaque cycle du premier signal d'horloge, un traitement du type "papillon" sur chacun desdits groupes ainsi formés de façon à élaborer des groupes successifs de quatre données intermédiaires (A*) respectivement ordonnées au sein de quatre segments intermédiaires consécutifs, un module multiplicateur (MD2) apte à multiplier, à chaque cycle du premier signal d'horloge, les données intermédiaires (A*) par des coefficients multiplicateurs prédéterminés (W), des moyens de commande aptes à délivrer aux moyens de mémorisation élémentaires les données contenues au moins dans les trois premiers segments du bloc courant au fur et à mesure de leur réception, aptes à substituer respectivement certaines des données mémorisées du bloc courant par les données intermédiaires contenues dans les trois derniers segments intermédiaires, et aptes à chaque cycle du premier signal d'horloge, à redélivrer aux moyens de mémorisation élémentaires les informations extraites des moyens de mémorisation et non utilisées par le module additionneur/soustracteur ou le module multiplicateur.

**8.** Dispositif selon la revendication 7 prise en combinaison avec la revendication 3 ou 4, **caractérisé par le fait que** les moyens de commande de chaque étage de traitement du premier type sont

aptes à délivrer aux moyens de mémorisation élémentaires (MM) les données contenues dans les trois premiers segments au fur et à mesure de leur réception,

aptes, au fur et à mesure de la réception des données contenues dans le quatrième segment, à substituer respectivement les données mémorisées, par les données intermédiaires contenues dans les trois derniers segments intermédiaires.

**9.** Dispositif selon la revendications 7 prise en combinaison avec la revendication 5 ou 6, **caractérisé par le fait que** les moyens de commande de chaque étage de traitement du deuxième type sont

aptes à délivrer aux moyens de mémorisation élémentaires (MM) les données contenues dans les quatre segments du bloc courant au fur et à mesure de leur réception,

aptes, au fur et à mesure de la réception des données contenues dans le premier segment du bloc suivant, à substituer respectivement les données mémorisées des trois derniers segments du bloc courant par les données intermédiaires contenues dans les trois derniers segments intermédiaires.

**10.** Dispositif selon la revendication 8 ou 9, **caractérisé par le fait que** les moyens de mémorisation élémentaires comportent un premier registre (REG1) connecté à la sortie de la mémoire (MM), un deuxième registre (REG2) connecté à l'entrée de la mémoire, **par le fait que** la sortie du premier registre est connecté en premier lieu à l'entrée du deuxième registre par l'intermédiaire d'un premier multiplexeur commandable (MX1), en deuxième lieu à l'entrée du module additionneur/soustracteur (MD1), et en troisième lieu à l'entrée du module multiplicateur (MD2) par l'intermédiaire d'un deuxième multiplexeur commandable (MX2), **par le fait que** la sortie du module additionneur/ soustracteur (MD1) est connectée d'une part à l'entrée du premier registre (REG1) par l'intermédiaire du premier multiplexeur et d'autre part à l'entrée du module multiplicateur par l'intermédiaire du deuxième multiplexeur, **par le fait que** les moyens de commande comportent les deux multiplexeurs (MX1, MX2), ainsi qu'un premier compteur modulo N (WRC) cadencé par le premier signal d'horloge, réinitialisable à la réception de la première donnée de chaque bloc, commandant le premier multiplexeur, et un deuxième compteur modulo N (RDC) cadencé par le premier signal d'horloge, réinitialisable à l'émission de la première donnée de sortie de l'étage, commandant le deuxième multiplexeur, et **par le fait que** les moyens de traitement élémentaires comprennent des moyens d'adressage de la mémoire comportant un compteur modulo N/4-1.

**11.** Dispositif selon la revendication 3 ou 5, **caractérisé par le fait que** les moyens de mémorisation élémentaires (MM) d'un étage de traitement d'un premier type comportent trois mémoires élémentaires distinctes (MM1, MM2, MM3) ayant chacune une capacité de stockage égale à N/4 données de façon à stocker chacune N/4 mots de une donnée, et les moyens de mémorisation élémentaires (MM) d'un étage de traitement d'un deuxième type comportent quatre mémoires élémentaires distinctes ayant chacune une capacité de stockage égale à N/4 données de façon à stocker chacune N/4 mots de une donnée, N étant la taille des blocs de données traités par ledit étage du premier ou du deuxième type, et **par le fait que** ces mémoires élémentaires distinctes sont sélectionnables et adressables sélectivement en lecture et en écriture.

**12.** Dispositif selon la revendication 11, **caractérisé par le fait que** chaque étage de traitement à radix 4 comporte une entrée pour recevoir séquentiellement au rythme d'un premier signal d'horloge (SMCK) les N données d'un bloc courant ordonnées au sein de quatre segments consécutifs contenant chacun N/4 données, chaque donnée d'un segment formant avec les données homologues des trois autres segments un groupe de quatre données, **par le fait que** les moyens de traitement élémentaires (MTE) comportent un module additionneur/soustracteur (MD1) apte à effectuer, à chaque cycle du premier signal d'horloge, un traitement du type "papillon" sur chacun desdits groupes ainsi formés de façon à élaborer des groupes successifs de quatre données intermédiaires (A*) respectivement ordonnées au sein de quatre segments intermédiaires consécutifs, un module multiplicateur (MD2) apte à multiplier, à chaque cycle du premier signal d'horloge, les données intermédiaires (A*) par des coefficients multiplicateurs prédéterminés (W), des moyens de commande aptes à sélectionner et adresser sélectivement en lecture l'une au moins des mémoires élémentaires, à sélectionner et adresser sélectivement en écriture l'une au moins des mémoires élémentaires, la lecture et l'écriture s'effectuant à la même adresse dans chacune des mémoires élémentaires sélectionnées, de façon à délivrer sélectivement aux mémoires élémentaires les données contenues au moins dans les trois premiers segments du bloc courant au fur et à mesure de leur réception, et à substituer respectivement et sélectivement certaines des données mémorisées du bloc courant par les données intermédiaires contenues dans les trois derniers segments intermédiaires.

13. Dispositif selon la revendication 12, **caractérisé par le fait que** les moyens de commande comportent un premier compteur modulo N (WRC) cadencé par le premier signal d'horloge, réinitialisable à la réception de la première donnée de chaque bloc, et un deuxième compteur modulo N (RDC) cadencé par le premier signal d'horloge, réinitialisable à l'émission de la première donnée de sortie de l'étage, et **par le fait que** la valeur du premier compteur (WRC) détermine celle ou celles des mémoires élémentaires à sélectionner et adresser en écriture, tandis que la valeur du deuxième compteur (RDC) détermine celle ou celles des mémoires élémentaires à sélectionner et adresser en lecture.

14. Dispositif selon la revendication 12 ou 13, **caractérisé par le fait que** les moyens de traitement élémentaires comportent des moyens d'adressage des mémoires élémentaires comportant un compteur modulo N/4 dont la valeur définit l'adresse d'écriture et/ou de lecture dans la ou les mémoires élémentaires sélectionnées, et **par le fait que** les moyens de commande sont aptes à mémoriser l'adresse d'écriture lors de la réception de la première donnée de chaque bloc, et à réutiliser cette adresse lorsque la valeur du premier compteur (WRC) atteint 3N/4.

15. Dispositif selon la revendication 13 ou 14, **caractérisé par le fait que** les moyens de mémorisation élémentaires comportent en outre un premier registre (REG1) connecté à la sortie des mémoires élémentaires (MM), un deuxième registre (REG2) connecté à l'entrée des mémoires élémentaires, **par le fait que** la sortie du premier registre est connecté en premier lieu à l'entrée du deuxième registre par l'intermédiaire d'un premier multiplexeur commandable (MX1), en deuxième lieu à l'entrée du module additionneur/soustracteur (MD1), et en troisième lieu à l'entrée du module multiplicateur (MD2) par l'intermédiaire d'un deuxième multiplexeur commandable (MX2), **par le fait que** la sortie du module additionneur/soustracteur (MD1) est connectée d'une part à l'entrée du premier registre (REG1) par l'intermédiaire du premier multiplexeur et d'autre part à l'entrée du module multiplicateur par l'intermédiaire du deuxième multiplexeur, **par le fait que** les moyens de commande comportent également les deux multiplexeurs (MX1, MX2), et **par le fait que** le premier compteur modulo N (WRC) commande le premier multiplexeur, le deuxième compteur modulo N (RDC) commandant le deuxième multiplexeur.

16. Procédé de commande d'un étage de traitement radix 4 d'un dispositif de calcul d'une transformée de Fourier à architecture pipelinée, **caractérisé par le fait que**, pour chaque bloc de données reçu en entrée de l'étage (ET0), on ne stocke que trois quarts des données du bloc dans les moyens de mémorisation (MM) comportant une mémoire à accès aléatoire.

17. Procédé selon la revendication 16, **caractérisé par le fait que** l'étage reçoit séquentiellement les N données (A) du bloc ordonnées au sein de quatre segments consécutifs contenant chacun N/4 données, chaque donnée d'un segment formant avec les données homologues des trois autres segments un groupe de quatre données, **par le fait qu'**on stocke dans les moyens de mémorisation (MM) les données contenues dans les trois premiers segments au fur et à mesure de leur réception, **par le fait qu'**au fur et à mesure de la réception des données contenues dans le quatrième segment, on effectue un traitement du type "papillon" sur chacun desdits groupes de façon à élaborer des groupes successifs de quatre données intermédiaires (A*) respectivement ordonnées au sein de quatre segments intermédiaires consécutifs, et on remplace respectivement les données mémorisées, par les données intermédiaires contenues dans les trois derniers segments intermédiaires.

**Claims**

1. Electronic device for computing a Fourier transform having pipelined architecture, **characterized in that** it comprises at least one processing stage (ET0) with radix equal to 4 comprising elementary processing means (MTE) performing processing operations for Fourier transforms of elementary size equal to 4 on blocks of data, as well as elementary storage means comprising a random-access memory (MM), in particular a single-access memory.

2. Device according to Claim 1, **characterized in that** the elementary processing means (MTE) of the radix 4 stage respectively perform N/4 processing operations of the "butterfly" type on N/4 distinct groups of four data of each data block processed by this stage, N being the size of the said block.

3. Device according to Claim 1 or 2, **characterized in that** the processing stages with radix equal to 4 comprise at least one processing stage of a first type whose elementary storage means (MM) have a storage capacity equal to 3N/4 data, N being the size of the data blocks processed by the said stage of the first type.

4. Device according to Claim 3, **characterized in that** the elementary storage means of the processing stage of the first type comprise a random-access memory, in particular a single-access memory, and n registers (REG1, REG3) mutually connected in series with the memory (MM), **in that** the memory is able to store (N/4) - (n - 1) words of three data, and **in that** each register is able to store 1 word of three data.

5. Device according to one of the preceding claims, **characterized in that** the processing stages with radix equal to 4 comprise at least one processing stage of a second type whose elementary storage means (MM) have a storage capacity equal to N, N being the size of the data blocks processed by the said stage, and **in that** the elementary processing means (MTE) of this stage of the second type comprise means able to determine the dynamic range of the data of each block processed and to perform a realignment of these data having regard to the said dynamic range.

6. Device according to Claim 5, **characterized in that** the elementary storage means of the processing stage of a second type comprise a random-access memory, in particular a single-access memory, and registers (REG1, REG2) mutually connected in series with the memory, **in that** the memory is able to store (N/4) - (n - 1) words of four data, and **in that** each register is able to store 1 word of four data.

7. Device according to any one of the preceding claims, **characterized in that** each radix 4 processing stage comprises an input for sequentially receiving, at the tempo of a first clock signal (SMCK), the N data of a current block, these data being ordered within four consecutive segments each containing N/4 data, each datum of a segment forming, together with the counterpart data of the other three segments, a group of four data, **in that** the elementary processing means (MTE) comprise an adder/subtracter module (MD1) able to perform, at each cycle of the first clock signal, a processing operation of the "butterfly" type on each of the said groups thus formed so as to derive successive groups of four intermediate data (A*) respectively ordered within four consecutive intermediate segments, a multiplier module (MD2) able to multiply, at each cycle of the first clock signal, the intermediate data (A*) by predetermined multiplier coefficients (W), control means able to deliver to the elementary storage means the data contained at least in the first three segments of the current block as they are received, able respectively to substitute some of the stored data of the current block with the intermediate data contained in the last three intermediate segments, and able at each cycle of the first clock signal, to redeliver to the elementary storage means the information extracted from the storage means and not used by the adder/subtracter module or the multiplier module.

8. Device according to Claim 7 taken in combination with Claim 3 or 4, **characterized in that** the control means of each processing stage of the first type are
able to deliver to the elementary storage means (MM) the data contained in the first three segments as they are received,
able, as the data contained in the fourth segment are received, respectively to substitute the stored data with the intermediate data contained in the last three intermediate segments.

9. Device according to Claim 7 taken in combination with Claim 5 or 6, **characterized in that** the control means of each processing stage of the second type are
able to deliver to the elementary storage means (MM) the data contained in the four segments of the current block as they are received,
able, as the data contained in the first segment of the next block are received, respectively to substitute the stored data of the last three segments of the current block with the intermediate data contained in the last three intermediate segments.

10. Device according to Claim 8 or 9, **characterized in that** the elementary storage means comprise a first register (REG1) connected to the output of the memory (MM), a second register (REG2) connected to the input of the memory, **in that** the output of the first register is connected firstly to the input of the second register by way of a first controllable multiplexer (MX1), secondly to the input of the adder/subtracter module (MD1), and thirdly to the input of the multiplier module (MD2) by way of a second controllable multiplexer (MX2), **in that** the output of the adder/subtracter module (MD1) is connected on the one hand to the input of the first register (REG1) by way of the first multiplexer and on the other hand to the input of the multiplier module by way of the second multiplexer, **in that** the control means comprise the two multiplexers (MX1, MX2), as well as a first counter modulo N (WRC) clocked by the first clock signal, reinitializable on reception of the first datum of each block, controlling the first multiplexer, and a second counter modulo N (RDC) clocked by the first clock signal, reinitializable on transmission of the first output datum of the stage, controlling the second multiplexer, and **in that** the elementary processing means comprise means for addressing the memory comprising a counter modulo N/4-1.

11. Device according to Claim 3 or 5, **characterized in that** the elementary storage means (MM) of a processing stage of a first type comprise three distinct elementary memories (MM1, MM2, MM3) each having a storage capacity equal to N/4 data so as each to store N/4 words of a datum, and the elementary storage means (MM) of a processing stage of a second type comprise four distinct elementary memories each having a storage capacity equal to N/4 data so as each to store N/4 words of a datum, N being the size of the data blocks processed by the said stage of the first or of the second type, and **in that** these distinct elementary memories are selectable and addressable selectively in read mode and in write mode.

12. Device according to Claim 11, **characterized in that** each radix 4 processing stage comprises an input for sequentially receiving, at the tempo of a first clock signal (SMCK), the N data of a current block, these data being ordered within four consecutive segments each containing N/4 data, each datum of a segment forming, together with the counterpart data of the other three segments, a group of four data, **in that** the elementary processing means (MTE) comprise an adder/subtracter module (MD1) able to perform, at each cycle of the first clock signal, a processing operation of the "butterfly" type on each of the said groups thus formed so as to derive successive groups of four intermediate data (A*) respectively ordered within four consecutive intermediate segments, a multiplier module (MD2) able to multiply, at each cycle of the first clock signal, the intermediate data (A*) by predetermined multiplier coefficients (W), control means able to select and address selectively in read mode one at least of the elementary memories, to select and address selectively in write mode one at least of the elementary memories, reading and writing being performed at the same address in each of the selected elementary memories, so as selectively to deliver to the elementary memories the data contained at least in the first three segments of the current block as they are received, and respectively and selectively substitute some of the stored data of the current block with the intermediate data contained in the last three intermediate segments.

13. Device according to Claim 12, **characterized in that** the control means comprise a first counter modulo N (WRC) clocked by the first clock signal, reinitializable on receiving the first datum of each block, and a second counter modulo N (RDC) clocked by the first clock signal, reinitializable on transmission of the first output datum from the stage, and **in that** the value of the first counter (WRC) determines that or those of the elementary memories to be selected and addressed in write mode, whilst the value of the second counter (RDC) determines that or those of the elementary memories to be selected and addressed in read mode.

14. Device according to Claim 12 or 13, **characterized in that** the elementary processing means comprise means for addressing the elementary memories comprising a counter modulo N/4 whose value defines the write and/or read address in the selected elementary memory or memories, and **in that** the control means are able to store the write address on reception of the first datum from each block, and to reuse this address when the value of the first counter (WRC) reaches 3N/4.

15. Device according to Claim 13 or 14, **characterized in that** the elementary storage means furthermore comprise a first register (REG1) connected to the output of the elementary memories (MM), a second register (REG2) connected to the input of the elementary memories, **in that** the output of the first register is connected firstly to the input of the second register by way of a first controllable multiplexer (MX1), secondly to the input of the adder/subtracter module (MD1), and thirdly to the input of the multiplier module (MD2) by way of a second controllable multiplexer (MX2), **in that** the output of the adder/subtracter module (MD1) is connected on the one hand to the input of the first register (REG1) by way of the first multiplexer and on the other hand to the input of the multiplier module by way of the second multiplexer, **in that** the control means also comprise the two multiplexers (MX1, MX2), and **in that** the first counter modulo N (WRC) controls the first multiplexer, the second counter modulo N (RDC) controlling the second multiplexer.

16. Process for controlling a radix 4 processing stage of a device for computing a Fourier transform having pipelined architecture, **characterized in that**, for each block of data received as input to the stage (ET0), only three quarters of the data of the block are stored in storage means (MM) comprising a random-access memory.

17. Process according to Claim 16, **characterized in that** the stage sequentially receives the N data (A) of the block, these data being ordered within four consecutive segments each containing N/4 data, each datum of a segment forming, together with the counterpart data of the other three segments, a group of four data, **in that** the data contained in the first three segments are stored in the storage means (MM) as they are received, **in that** as the data contained in the fourth segment are received, a processing operation of the "butterfly" type is performed on each of the said groups so as to derive successive groups of four intermediate data (A*) respectively ordered within four consecutive intermediate segments, and the stored data are replaced respectively with the intermediate data contained in the last three intermediate segments.

**Patentansprüche**

1. Elektronische Pipeline-Vorrichtung zur Berechnung einer Fourier-Transformation, **dadurch gekennzeichnet, daß** sie mindestens eine Verarbeitungsstufe (ETO) zur Basis 4 aufweist, die elementare Verarbeitungseinrichtungen (MTE) aufweist, die Fouriertransformationen einer elementaren Größe gleich 4 an Datenblöcken durchführen, sowie elementare Speichereinrichtungen aufweist, die einen Speicher mit wahlfreiem Zugriff (MM), insbesondere einen Speicher mit einfachem Zugriff, aufweisen.

2. Vorrichtung nach Anspruch 1, **dadurch gekennzeichnet, daß** die elementaren Verarbeitungseinrichtungen (MTE) der Stufe zur Basis 4 jeweils N/4 Verarbeitungen des "Schmetterling"typs an N/4 unterschiedlichen Gruppen zu je vier Daten von jedem von dieser Stufe verarbeiteten Datenblock durchführen, wobei N die Größe des Blocks ist.

3. Vorrichtung nach Anspruch 1 oder 2, **dadurch gekennzeichnet, daß** die Verarbeitungsstufen zur Basis 4 mindestens eine Verarbeitungsstufe eines ersten Typs aufweisen, deren elementare Speichereinrichtungen (MM) eine Speicherkapazität gleich 3N/4 Daten haben, wobei N die Größe der von der Stufe des ersten Typs verarbeiteten Datenblöcke ist.

4. Vorrichtung nach Anspruch 3, **dadurch gekennzeichnet, daß** die elementaren Speichereinrichtungen der Verarbeitungsstufe des ersten Typs einen Speicher mit wahlfreiem Zugriff, insbesondere einfachem Zugriff, und n mit dem Speicher (MM) gegenseitig in Reihe geschaltete Register (REG1, REG3) aufweisen, **dadurch**, daß der Speicher in der Lage ist, (N/4)-(n-1) Wörter zu je drei Daten zu speichern, und **dadurch**, daß jedes Register in der Lage ist, 1 Wort zu je drei Daten zu speichern.

5. Vorrichtung nach einem der vorstehenden Ansprüche, **dadurch gekennzeichnet, daß** die Verarbeitungsstufen zur Basis 4 mindestens eine Verarbeitungsstufe eines zweiten Typs aufweisen, deren elementare Speichereinrichtungen (MM) eine Speicherkapazität gleich N haben, wobei N die Größe der von der Stufe verarbeiteten Datenblöcke ist, und **dadurch**, daß die elementaren Verarbeitungseinrichtungen (MTE) dieser Stufe des zweiten Typs Einrichtungen aufweisen, die in der Lage sind, die Dynamik der Daten jedes verarbeiteten Blocks zu bestimmen und eine Neuskalierung dieser Daten unter Berücksichtigung der Dynamik durchzuführen.

6. Vorrichtung nach Anspruch 5, **dadurch gekennzeichnet, daß** die elementaren Speichereinrichtungen der Verarbeitungsstufe eines zweiten Typs einen Speicher mit wahlfreiem Zugriff, insbesondere mit einfachem Zugriff, und n mit dem Speicher gegenseitig in Reihe geschaltete Register (REG1, REG2) aufweisen, **dadurch**, daß der Speicher in der Lage ist, (N/4)-(n-1) Wörter zu je vier Daten zu speichern, und **dadurch**, daß jedes Register in der Lage ist, 1 Wort zu je vier Daten zu speichern.

7. Vorrichtung nach einem der vorstehenden Ansprüche, **dadurch gekennzeichnet, daß** jede Verarbeitungsstufe zur Basis 4 einen Eingang aufweist, um sequentiell im Takt eines ersten Taktsignals (SMCK) die N Daten eines aktuellen Blocks zu empfangen, die in vier aufeinanderfolgenden Segmenten angeordnet sind, die jeweils N/4 Daten enthalten, wobei jedes Datum eines Segments mit den homologen Daten von drei anderen Segmenten eine Gruppe zu je vier Daten bildet, **dadurch**, daß die elementaren Verarbeitungseinrichtungen (MTE) aufweisen:

ein Addierer/Subtrahierer-Modul (MD1), das in der Lage ist, bei jedem Zyklus des ersten Taktsignals eine Verarbeitung des "Schmetterling"typs an jeder der auf diese Weise gebildeten Gruppen durchzuführen, um aufeinanderfolgende Gruppen zu je vier Zwischendaten (A*) auszuarbeiten, die jeweils in vier aufeinanderfolgenden Zwischensegmenten angeordnet sind,
ein Multiplizierer-Modul (MD2), das in der Lage ist, bei jedem Zyklus des ersten Taktsignals die Zwischendaten (A*) mit vorgegebenen Multiplikatorkoeffizienten (W) zu multiplizieren,
Steuereinrichtungen, die in der Lage sind, an die elementaren Speichereinrichtungen die Daten, die mindestens in den drei ersten Segmenten des aktuellen Blocks enthalten sind, nach Maßgabe ihres Empfangs auszugeben, in der Lage sind, jeweils bestimmte der gespeicherten Daten des aktuellen Blocks durch die in den drei letzten Zwischensegmenten enthaltenen Zwischendaten zu ersetzen, und in der Lage sind, bei jedem Zyklus des ersten Taktsignals die aus den Speichereinrichtungen extrahierten und von dem Addierer/Subtrahierer-Modul oder dem Miltiplizierer-Modul nicht verwendeten Informationen erneut an die elementaren Speichereinrichtungen auszugeben.

8. Vorrichtung nach Anspruch 7 in Kombination mit Anspruch 3 oder 4, **dadurch gekennzeichnet, daß** die Steuereinrichtungen jeder Verarbeitungsstufe des ersten Typs in der Lage sind,
an die elementaren Speichereinrichtungen (MM) die in den drei ersten Segmenten enthaltenen Daten nach Maßgabe ihres Empfangs auszugeben,
nach Maßgabe des Empfangs der in dem vierten Segment enthaltenen Daten die gespeicherten Daten jeweils durch die in den drei letzten Zwischensegmenten enthaltenen Zwischendaten zu ersetzen.

9. Vorrichtung nach Anspruch 7 in Kombination mit Anspruch 5 oder 6, **dadurch gekennzeichnet, daß** die Steuereinrichtungen jeder Verarbeitungsstufe des zweiten Typs in der Lage sind,
an die elementaren Speichereinrichtungen (MM) die in den vier Segmenten des aktuellen Blocks enthaltenen Daten nach Maßgabe ihres Empfangs auszugeben,
nach Maßgabe des Empfangs der in dem ersten Segment des folgenden Blocks enthaltenen Daten die gespeicherten Daten der drei letzten Segmente des aktuellen Blocks jeweils durch die in den drei letzten Zwischensegmenten enthaltenen Zwischendaten zu ersetzen.

10. Vorrichtung nach Anspruch 8 oder 9, **dadurch gekennzeichnet, daß** die elementaren Speichereinrichtungen ein mit dem Ausgang des Speichers (MM) verbundenes erstes Register (REG1), ein mit dem Eingang des Speichers verbundenes zweites Register (REG2) aufweisen, **dadurch**, daß der Ausgang des ersten Registers erstens mit dem Eingang des zweiten Registers über einen ersten steuerbaren Multiplexer (MX1), zweitens mit dem Eingang des Addierer/Subtrahierer-Moduls (MD1) und drittens mit dem Eingang des Multiplizierer-Moduls (MD2) über einen zweiten steuerbaren Multiplexer (MX2) verbunden ist, **dadurch**, daß der Ausgang des Addierer/Subtrahierer-Moduls (MD1) einerseits mit dem Eingang des ersten Registers (REG1) über den ersten Multiplexer und andererseits mit dem Eingang des Multiplizierer-Moduls über den zweiten Multiplexer verbunden ist, **dadurch**, daß die Steuereinrichturigen die zwei Multiplexer (MX1,MX2) sowie einen vom ersten Taktsignal getakteten, beim Empfang des ersten Datums jedes Blocks reinitialisierbaren, den ersten Multiplexer steuernden ersten Modulo-N-Zähler (WRC) aufweisen und einen vom ersten Taktsignal getakteten, beim Aussenden des ersten Ausgabedatums der Stufe reinitialisierbaren, den zweiten Multiplexer steuernden zweiten Modulo-N-Zähler (RDC) aufweisen, und **dadurch**, daß die elementaren Verarbeitungseinrichtungen Adreßeinrichtüngen zum Adressieren des Speichers aufweisen, die einen Modulo-N/4-Zähler aufweisen.

11. Vorrichtung nach Anspruch 3 oder 5, **dadurch gekennzeichnet, daß** die elementaren Speichereinrichtungen (MM) einer Verarbeitungsstufe eines ersten Typs drei separate elementare Speicher (MM1,MM2,MM3) mit jeweils einer Speicherkapazität von N/4 Daten aufweisen, um jeweils N/4 Wörter zu je einem Datum zu speichern, und die elementaren Speichereinrichtungen (MM) einer Verarbeitungsstufe eines zweiten Typs vier separate elementare Speicher mit jeweils einer Speicherkapazität von N/4 Daten aufweisen, um jeweils N/4 Wörter zu je einem Datum zu speichern, wobei N die Größe der von der Stufe des ersten Typs oder des zweiten Typs verarbeiteten Datenblöcke ist, und **dadurch**, daß diese separaten elementaren Speicher selektiv für ein Lesen und ein Schreiben auswählbar und adressierbar sind.

12. Vorrichtung nach Anspruch 11, **dadurch gekennzeichnet, daß** jede Verarbeitungsstufe zur Basis 4 einen Eingang aufweist, um sequentiell im Takt eines ersten Taktsignals (SMCK) die N Daten eines aktuellen Blocks zu empfangen, die in vier aufeinander folgenden Segmente angeordnet sind, die jeweils N/4 Daten enthalten, wobei jedes Datum eines Segments mit den homologen Daten von drei anderen Segmenten eine Gruppe zu je vier Daten bildet, **dadurch**, daß die elementaren Verarbeitungseinrichtungen (MTE) aufweisen:

ein Addierer/Subtrahierer-Modul (MD1), das in der Lage ist, bei jedem Zyklus des ersten Taktsignals eine Verarbeitung des "Schmetterling"typs an jeder der auf diese Weise gebildeten Gruppen durchzuführen, um aufeinanderfolgende Gruppen zu je vier Zwischendaten (A*) auszuarbeiten, die jeweils in vier aufeinanderfolgenden Zwischensegmenten angeordnet sind,
ein Multiplizierer-Modul (MD2), das in der Lage ist, bei jedem Zyklus des ersten Taktsignals die Zwischendaten (A*) mit vorgegebenen Multiplikatorköeffizienten (W) zu multiplizieren,
Steuereinrichtungen, die in der Lage sind, selektiv mindestens einen der elementaren Speicher zum Lesen auszuwählen und zu adressieren, selektiv mindestens einen der elementaren Speicher zum Schreiben auszuwählen und zu adressieren, wobei das Lesen und das Schreiben an der gleichen Adresse in jedem der ausgewählten elementaren Speicher erfolgt, um an die elementaren Speichereinrichtungen die Daten, die in mindestens den drei ersten Segmenten des aktuellen Blocks enthalten sind, nach Maßgabe ihres Empfangs auszugeben und jeweils und selektiv bestimmte gespeicherte Daten des aktuellen Blocks durch die in den drei letzten Zwischensegmenten enthaltenen Zwischendaten zu ersetzen.

**13.** Vorrichtung nach Anspruch 12, **dadurch gekennzeichnet, daß** die Steuereinrichtungen einen vom ersten Taktsignal getakteten, beim Empfang des ersten Datums jedes Blocks reinitialisierbaren ersten Modulo-N-Zähler (WRC) aufweisen und einen vom ersten Taktsignal getakteten, beim Aussenden des ersten Ausgabedatums der Stufe reinitialisierbaren zweiten Modulo-N-Zähler (RDC) aufweisen, und **dadurch**, daß der Wert des ersten Zählers (WRC) denjenigen oder diejenigen der elementaren Speicher bestimmt, der/die für ein Schreiben auszuwählen und zu adressieren ist/sind, während der Wert des zweiten Zählers (RDC) denjenigen oder diejenigen der elementaren Speicher bestimmt, der/die für ein Lesen auszuwählen und zu adressieren ist/sind.

**14.** Vorrichtung nach Anspruch 12 oder 13, **dadurch gekennzeichnet, daß** die elementaren Verarbeitungseinrichtungen Adre-ßeinrichtungen zum Adressieren der elementaren Speicher aufweisen, die einen Modulo-N/4-Zähler aufweisen, dessen Wert die Schreibadresse und/oder Leseadresse in dem oder den ausgewählten elementaren Speichern definiert, und **dadurch**, daß die Steuereinrichtungen in der Lage sind, die Schreibadresse beim Empfang des ersten Datums jedes Blocks zu speichern und diese Adresse wieder zu verwenden, wenn der Wert des ersten Zählers (WRC) 3N/4 erreicht.

**15.** Vorrichtung nach Anspruch 13 oder 14, **dadurch gekennzeichnet, daß** die elementaren Speichereinrichtungen ferner ein mit dem Ausgang der elementaren Speicher (MM) verbundenes erstes Register (REG1), ein mit dem Eingang der elementaren Speicher verbundenes zweites Register (REG2) aufweisen, **dadurch**, daß der Ausgang des ersten Registers erstens mit dem Eingang des zweiten Registers über einen ersten steuerbaren Multiplexer (MX1), zweitens mit dem Eingang des Addierer/Subtrahierer-Moduls (MD1) und drittens mit dem Eingang des Multiplizierer-Moduls (MD2) über einen zweiten steuerbaren Multiplexer (MX2) verbunden ist, **dadurch**, daß der Ausgang des Addierer/Subtrahierer-Moduls (MD1) einerseits mit dem Eingang des ersten Registers (REG1) über den ersten Multiplexer und andererseits mit dem Eingang des Multiplizierer-Moduls über den zweiten Multiplexer verbunden ist, **dadurch**, daß die Steuereinrichtungen außerdem die zwei Multiplexer (MX1, MX2) aufweisen und **dadurch**, daß der erste Modulo-N-Zähler (WRC) den ersten Multiplexer steuert, der zweite Modulo-N-Zähler (RDC) den zweiten Multiplexer steuert.

**16.** Verfahren zur Steuerung einer Basis-4-Verarbeitungsstufe einer Pipeline-Vorrichtung zur Berechnung einer Fourier-Transformation, **dadurch gekennzeichnet, daß** für jeden am Eingang der Stufe (ETO) empfangenen Datenblock nur dreiviertel der Daten des Blocks in den Speichereinrichtungen (MM) gespeichert werden, die einen Speicher mit wahlfreiem Zugriff aufweisen.

**17.** Verfahren nach Anspruch 16, **dadurch gekennzeichnet, daß** die Stufe sequentiell die N Daten (A) des Blocks empfängt, die in vier aufeinanderfolgenden Segmenten angeordnet sind, die jeweils N/4 Daten enthalten, wobei jedes Datum eines Segments mit den homologen Daten von drei anderen Segmenten eine Gruppe zu je vier Daten bildet, **dadurch**, daß in den Speichereinrichtungen (MM) die in den drei ersten Segmenten enthaltenen Daten nach Maßgabe ihres Empfangs gespeichert werden, **dadurch**, daß nach Maßgabe des Empfangs der in dem vierten Segment enthaltenen Daten eine Verarbeitung des "Schmetterling"typs an jeder der Gruppen durchgeführt wird, um aufeinanderfolgende Gruppen zu je vier Zwischendaten (A*), die jeweils in vier aufeinanderfolgenden Zwischensegmenten angeordnet sind, auszuarbeiten und die gespeicherten Daten jeweils durch die in den drei letzten Zwischensegmenten enthaltenen Zwischendaten zu ersetzen.

FIG.1

# FIG.2

# FIG.3

## FIG.4

$$\left[A_i^K, A_{\frac{N}{4}+i}^K, A_{\frac{N}{2}+i}^K\right] \leftarrow ML1i$$

$$\left[A_{\frac{N}{4}+i}^{K*}, A_{\frac{N}{2}+i}^{K*}, A_{\frac{3N}{4}+i}^{K*}\right] \leftarrow ML2i$$

$$\left[A_i^{K+1}, A_{\frac{N}{2}+i}^{K*}, A_{\frac{3N}{4}+i}^{K*}\right] \leftarrow ML3i$$

$$\left[A_i^{K+1}, A_{\frac{N}{4}+i}^{K+1}, A_{\frac{3N}{4}+i}^{K*}\right] \leftarrow ML4i$$

DE MM

REG1

INS

$$MD1 = \begin{bmatrix} 1 & 1 & 1 & 1 \\ 1 & -j & -1 & j \\ 1 & -1 & 1 & -1 \\ 1 & j & -1 & -j \end{bmatrix}$$

WRC → MX1

REG2

VERS MM

RDC → MX2

W → MD2

OUS

$$\left[A_{\frac{N}{4}+i}^{K*}, A_{\frac{N}{2}+i}^{K*}, A_{\frac{3N}{4}+i}^{K*}\right] \leftarrow ME1i$$

$$\left[A_i^{K+1}, A_{\frac{N}{2}+i}^{K*}, A_{\frac{3N}{4}+i}^{K*}\right] \leftarrow ME2i$$

$$\left[A_i^{K+1}, A_{\frac{N}{4}+i}^{K+1}, A_{\frac{3N}{4}+i}^{K*}\right] \leftarrow ME3i$$

$$\left[A_i^{K+1}, A_{\frac{N}{4}+i}^{K+1}, A_{\frac{N}{2}+i}^{K+1}\right] \leftarrow ME4i$$

# FIG.5

STBL      $BA^0$           STBL      $BA^1$

TEMPS

IG

STNX      $BB^0$-$BB^3$         STNX      $BB^4$-$BB^7$

TEMPS

IIN

# FIG.6a

EP 0 924 627 B1

# FIG.6b

EP 0 924 627 B1

MCK

STBL

WRC: 0, 1, 2, 3, 4, 5, 6, 7, 8, 9, 10, 11, 12, 13, 14, 15, 0, 1, 2, 0

INS: $A_0^1$, $A_1^1$, $A_2^1$, $A_3^1$, $A_4^1$, $A_5^1$, $A_6^1$, $A_7^1$, $A_8^1$, $A_9^1$, $A_{10}^1$, $A_{11}^1$, $A_{12}^1$, $A_{13}^1$, $A_{14}^1$, $A_{15}^1$, X, X, X, $A_0^2$

ADD: 1, 2, 0, 1, 2, 0, 1, 2, 0, 1, 2, 0, 1, 2, 0, 1, 2, 0, 1, 2

REG2:
| X | $A_0^1$ | $A_1^1$ | $A_2^1$ | $A_3^1$ | $A_0^1$ | $A_1^1$ | $A_2^1$ | $A_3^1$ | $A_0^1$ | $A_1^1$ | $A_2^1$ | $A_3^1$ | $A_4^{1*}$ | $A_5^{1*}$ | $A_6^{1*}$ | $A_7^{1*}$ | X | X | X |
| $A_{10}^{0*}$ | $A_{11}^{0*}$ | $A_8^{0*}$ | $A_9^{0*}$ | $A_{10}^{0*}$ | $A_4^1$ | $A_5^1$ | $A_6^1$ | $A_7^1$ | $A_4^1$ | $A_5^1$ | $A_6^1$ | $A_7^1$ | $A_8^{1*}$ | $A_9^{1*}$ | $A_{10}^{1*}$ | $A_{11}^{1*}$ | $A_8^{1*}$ | $A_9^{1*}$ | $A_{10}^{1*}$ |
| $A_{14}^{0*}$ | $A_{15}^{0*}$ | $A_{12}^{0*}$ | $A_{13}^{0*}$ | $A_{14}^{0*}$ | $A_{15}^{0*}$ | $A_{12}^{0*}$ | $A_{13}^{0*}$ | $A_{14}^{0*}$ | $A_8^1$ | $A_9^1$ | $A_{10}^1$ | $A_{11}^1$ | $A_{12}^{1*}$ | $A_{13}^{1*}$ | $A_{14}^{1*}$ | $A_{15}^{1*}$ | $A_{12}^{1*}$ | $A_{13}^{1*}$ | $A_{14}^{1*}$ |

OUS: $B_3^1$, $B_0^2$, $B_1^2$, $B_2^2$, $B_3^2$, $B_0^3$, $B_1^3$, $B_2^3$, $B_3^3$, X, X, X, $B_0^4$, $B_1^4$, $B_2^4$, $B_3^4$, $B_0^5$, $B_1^5$, $B_2^5$, $B_3^5$

REG1:
| $A_7^{0*}$ | X | X | X | $A_0^1$ | $A_1^1$ | $A_2^1$ | $A_3^1$ | $A_0^1$ | $A_1^1$ | $A_2^1$ | $A_3^1$ | $A_0^1$ | $A_1^1$ | $A_2^1$ | $A_3^1$ | $A_4^{1*}$ | $A_5^{1*}$ | $A_6^{1*}$ | $A_7^{1*}$ |
| $A_{11}^{0*}$ | $A_8^{0*}$ | $A_9^{0*}$ | $A_{10}^{0*}$ | $A_{11}^{0*}$ | $A_8^{0*}$ | $A_9^{0*}$ | $A_{10}^{0*}$ | $A_4^1$ | $A_5^1$ | $A_6^1$ | $A_7^1$ | $A_4^1$ | $A_5^1$ | $A_6^1$ | $A_7^1$ | $A_8^{1*}$ | $A_9^{1*}$ | $A_{10}^{1*}$ | $A_{11}^{1*}$ |
| $A_{15}^{0*}$ | $A_{12}^{0*}$ | $A_{13}^{0*}$ | $A_{14}^{0*}$ | $A_{15}^{0*}$ | $A_{12}^{0*}$ | $A_{13}^{0*}$ | $A_{14}^{0*}$ | $A_{15}^{0*}$ | $A_{12}^{0*}$ | $A_{13}^{0*}$ | $A_{14}^{0*}$ | $A_8^1$ | $A_9^1$ | $A_{10}^1$ | $A_{11}^1$ | $A_{12}^{1*}$ | $A_{13}^{1*}$ | $A_{14}^{1*}$ | $A_{15}^{1*}$ |

RDC: 7, 8, 9, 10, 11, 12, 13, 14, 15, 0, 1, 2, 0, 1, 2, 3, 4, 5, 6, 7

STNX

R/W

# FIG.7a

$$\left[ A_i^K, A_{\frac{N}{4}+i}^K, A_{\frac{N}{2}+i}^K, A_{3\frac{N}{4}+i}^K \right] \leftarrow \text{ML11i}$$

$$\left[ A_i^{K+1}, A_{\frac{N}{4}+i}^{K*}, A_{\frac{N}{2}+i}^{K*}, A_{3\frac{N}{4}+i}^{K*} \right] \leftarrow \text{ME11i}$$

# FIG.7b

$$\left[ A_i^{K+1}, A_{\frac{N}{4}+i}^{K*}, A_{\frac{N}{2}+i}^{K*}, A_{3\frac{N}{4}+i}^{K*} \right] \longleftarrow ML12i$$

$$A_i^{K+1} \quad A_{\frac{N}{4}+i}^{K*} \quad A_{\frac{N}{4}+i}^{K+1} \quad A_{\frac{N}{2}+i}^{K*} \quad A_{3\frac{N}{4}+i}^{K*} \longleftarrow MM$$

$$\left[ A_i^{K+1}, A_{\frac{N}{4}+i}^{K+1}, A_{\frac{N}{2}+i}^{K*}, A_{3\frac{N}{4}+i}^{K*} \right] \longleftarrow ME12i$$

# FIG.7c

$$\left[ A_i^{K+1}, A_{\frac{N}{4}+i}^{K+1}, A_{\frac{N}{2}+i}^{K*}, A_{3\frac{N}{4}+i}^{K*} \right] \quad \longleftarrow ML13i$$

$$\longleftarrow MM$$

$$\left[ A_i^{K+1}, A_{\frac{N}{4}+i}^{K+1}, A_{\frac{N}{2}+i}^{K+1}, A_{3\frac{N}{4}+i}^{K*} \right] \quad \longleftarrow ME13i$$

# FIG.7d

$$\left[ A_i^{K+1}, A_{\frac{N}{4}+i}^{K+1}, A_{\frac{N}{2}+i}^{K+1}, A_{3\frac{N}{4}+i}^{K*} \right] \longleftarrow ML14i$$

$$\left[ A_i^{K+1}, A_{\frac{N}{4}+i}^{K+1}, A_{\frac{N}{2}+i}^{K+1}, A_{3\frac{N}{4}+i}^{K+1} \right] \longleftarrow ME14i$$

# FIG.8